# EUROPEAN PATENT SPECIFICATION

(11) **EP 4 478 659 B1**
(45) Date of publication and mention of the grant of the patent: **02.12.2026**
(21) Application number: 22926176.3
(22) Date of filing: 12.10.2022
(51) Int. Cl.: H04W 4/40, H04W 12/041, H04L 9/08, H04L 9/40

(54) **METHOD AND DEVICE FOR TERMINAL AUTHENTICATION IN WIRELESS COMMUNICATION SYSTEM**
VERFAHREN UND VORRICHTUNG ZUR ENDGERÄTEAUTHENTIFIZIERUNG IN EINEM DRAHTLOSKOMMUNIKATIONSSYSTEM
PROCÉDÉ ET DISPOSITIF D'AUTHENTIFICATION DE TERMINAL DANS UN SYSTÈME DE COMMUNICATION SANS FIL

(30) Priority: 08.02.2022 KR 20220016379
(43) Date of publication of application: 18.12.2024
(73) Proprietor: LG Electronics Inc., Yeongdeungpo-gu Seoul 07336 (KR)
(72) Inventor: KIM, Anbin, Seoul 06772 (KR); KIM, Dongjoo, Seoul 06772 (KR)
(74) Representative: Mooser, Sebastian Thomas
(86) International application number: PCT/KR2022/015379
(87) International publication number: WO 2023/153578

(56) References cited:
- WO-A1-2020/249861
- WO-A1-2021/094109
- WO-A1-2021/148027
- WO-A1-2021/165111
- WO-A1-2021/201558
- WO-A1-2022/019619
- "3rd Generation Partnership Project; Technical Specification Group Services and System Aspects; Authentication and Key Management for Applications (AKMA) based on 3GPP credentials in the 5G System (5GS) (Release 17)", no. V17.4.0, 23 December 2021 (2021-12-23), pages 1 - 24, XP052083374, Retrieved from the Internet <URL:https://ftp.3gpp.org/Specs/archive/33_series/33.535/> [retrieved on 20211223]
- "3rd Generation Partnership Project; Technical Specification Group Services and System Aspects; Authentication and Key Management for Applications (AKMA) based on 3GPP credentials in the 5G System (5GS) (Release 17)", 3GPP STANDARD; TECHNICAL SPECIFICATION; 3GPP TS 33.535, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V17.4.0, 23 December 2021 (2021-12-23), Mobile Competence Centre ; 650, route des Lucioles ; F-06921 Sophia-Antipolis Cedex ; France, pages 1 - 24, XP052083374

## Description

### Technical Field

The present disclosure relates to a wireless communication system, and more particularly, to a method for performing authentication of a terminal. Specifically, the present disclosure relates to a method for notifying the expiry of expiration time of an application key, when the expiration time of the application key expires, and for refreshing the application key or performing new authentication, based on authentication and key management for applications (AKMA).

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

Prior art can be found, e.g., in "3^{rd} Generation Partnership Project; Technical Specification Group Services and System Aspects; Authentication and Key Management for Applications (AKMA) based on 3GPP credentials in the 5G System (5GS) (Release 17)" of the Technical Specification 3GPP TS 33.535.

### Disclosure

### Technical Problem

The present disclosure may provide a method and apparatus for performing authentication of a terminal in a wireless communication system.

The present disclosure may provide a method and apparatus for notifying the expiry of expiration time of an application key, when a terminal is provided with an application service through the application key based on AKMA in a wireless communication system.

The present disclosure may provide a method and apparatus for refreshing an application key in a wireless communication, when an application session is terminated based on expiry of expiration time for the application key.

The present disclosure may provide a method and apparatus for performing new authentication and configuring a new application key in a wireless communication system, when an application session is terminated based on expiry of expiration time for an application key.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

The invention is set out in the appended claims.

As an example of the present disclosure, a method for operating an application server in a wireless communication system may include receiving, by the application server, an application session establishment request including identification information of a first key from a terminal, wherein the terminal generates the first key and the identification information of the first key based on primary authentication with a network and an authentication server function (AUSF) generates an identical first key and the identification information of the first key based on the primary authentication, determining, by the application server, a first application key based on the identification information of the first key, transmitting an application session establishment response message to the terminal based on the first application key, and receiving data from the terminal through an established application session, and based on the application server determining the first application key, an expiration time of the first application key may be determined together, and the application session may be validly established within the expiration time of the first application key.

In addition, as an example of the present disclosure, an application server operating in a wireless communication system may include at least one transceiver, at least one processor, and at least one memory operably coupled with the at least one processor and storing instructions that instruct, when executed, the at least one processor to perform a specific operation, and the specific operation controls the at least one transceiver to enable the application server to receive an application session establishment request including identification information of a first key from a terminal, wherein the terminal generates the first key and the identification information of the first key based on primary authentication with a network and an authentication server function (AUSF) generates an identical first key and the identification information of the first key based on the primary authentication, controls the at least one transceiver to enable the application server to determine a first application key based on the identification information of the first key and to transmit an application session establishment response message to the terminal based on the first application key, and controls the at least one transceiver to enable the application server to receive data from the terminal through an established application session, and based on the application server determining the first application key, an expiration time of the first application key may be determined together, and the application session may be validly established within the expiration time of the first application key.

In addition, as an example of the present disclosure, a method for operating a terminal in a wireless communication system may include generating, by the terminal, a first key and identification information of the first key based on primary authentication with a network, wherein an authentication server function (AUSF) generates an identical first key and the identification information of the first key based on the primary authentication, transmitting, by the terminal, an application session establishment request including the identification information of the first key to an application server, receiving, by the terminal, an application session establishment response from the application server, and transmitting data through an application session that is established based on the received application session establishment response, and based on the identification information of the first key of the application session establishment request, an application key and an expiration time of the application key may be configured in the application server, and the terminal may transmit data through the established application session based on the application key.

In addition, as an example of the present disclosure, an application server operating in a wireless communication system may include at least one transceiver, at least one processor, and at least one memory operably coupled with the at least one processor and storing instructions that instruct, when executed, the at least one processor to perform a specific operation, and the specific operation generates a first key and identification information of the first key based on primary authentication with a network, wherein an authentication server function (AUSF) generates an identical first key and the identification information of the first key based on the primary authentication, controls the at least one transceiver to transmit an application session establishment request including the identification information of the first key to an application server, controls the at least one transceiver to receive an application session establishment response from the application server, and controls the at least one transceiver to transmit data through an application session that is established based on the received application session establishment response, and based on the identification information of the first key of the application session establishment request, an application key and an expiration time of the application key may be configured in the application server, and data may be transmitted through the established application session based on the application key.

In addition, as an example of the present disclosure, a device may include at least one memory and at least one processor functionally coupled with the at least one memory, and the at least one processor may control the device to receive an application session establishment request including identification information of a first key from a terminal, wherein the terminal generates the first key and the identification information of the first key based on primary authentication with a network and an authentication server function (AUSF) generates an identical first key and the identification information of the first key based on the primary authentication, control the device to determine a first application key based on the identification information of the first key, control the device to transmit an application session establishment response message to the terminal based on the first application key, and control the device to receive data from the terminal through an established application session, and based on the device determining the first application key, an expiration time of the first application key may be determined together, and the application session may be validly established within the expiration time of the first application key.

In addition, as an example of the present disclosure, a non-transitory computer-readable medium storing at least one instruction may include the at least one instruction that is executable by a processor, and the at least one instruction may control a device to receive an application session establishment request including identification information of a first key from a terminal, wherein the terminal generates the first key and the identification information of the first key based on primary authentication with a network and an authentication server function (AUSF) generates an identical first key and the identification information of the first key based on the primary authentication, control the device to determine a first application key based on the identification information of the first key, control the device to transmit an application session establishment response message to the terminal based on the first application key, and control the device to receive data from the terminal through an established application session, and based on the device determining the first application key, an expiration time of the first application key may be determined together, and the application session may be validly established within the expiration time of the first application key.

In addition, the following may be commonly applied.

As an example of the present disclosure, when an expiration time of a first application key expires, an application server may notify expiry information of the expiration time of the first application key to a terminal.

In addition, as an example of the present disclosure, in case an application server receives a connection request from a terminal after an expiration time of a first application key expires, the application server may notify expiry information of the expiration time of the first application key to the terminal through an application session reject message based on the connection request of the terminal, and cause information of the application session reject message may include the expiry information of the expiration time of the first application key and first application key reconfiguration information.

In addition, as an example of the present disclosure, in case an expiration time of a first application key expires, an application server may notify expiry information of the expiration time of the first application key to a terminal through a notification message, and the notification message may include the expiry information of the expiration time of the first application key and first application key reconfiguration information.

In addition, as an example of the present disclosure, an application server may transmit a notification message to a terminal at a time when an expiration time of the first application key expires.

In addition, as an example of the present disclosure, in case an expiration time of a first application key expires, an application session is terminated, and after the application session is terminated, an application server and a terminal may perform at least any one of an application key reestablishment procedure and a new authentication procedure.

In addition, as an example of the present disclosure, in case an application key reestablishment procedure is performed, a terminal may transmit an application session establishment request including identification information of a first key to an application server again, and the application server may determine a second application key based on the identification information of the first key, transmit an application session establishment response message to the terminal based on the second application key and receive data from the terminal through an established application session.

In addition, as an example of the present disclosure, a key value of a second application key may be the same as a key value of a first application key, and an expiration time of the second application key may be set differently from an expiration time of the first application key.

In addition, as an example of the present disclosure, in case a new authentication procedure is performed, a terminal and a network may perform primary authentication again and generate a second key and identification information of the second key based on the primary authentication, an AUSF may generate an identical second key and identification information of the second key, and an application server may determine a second application key based on the identification information of the second key, transmit an application session establishment response message to the terminal based on the second application key, and receive data from the terminal through an established application session.

In addition, as an example of the present disclosure, in case an application server determines a second application key, an expiration time of the second application key may be determined together, and an application session may be validly established within the expiration time of the second application key.

In addition, as an example of the present disclosure, a key value of a second application key may be set differently from a key value of a first application key, and an expiration time of the second application key may be set differently from an expiration time of the first application key.

In addition, as an example of the present disclosure, a new authentication procedure may be triggered by an application server.

In addition, as an example of the present disclosure, a new authentication procedure may be triggered by a terminal.

In addition, as an example of the present disclosure, an application server may transmit indication information indicating whether to perform an application key reestablishment procedure or a new authentication procedure to a terminal.

### Advantageous Effects

The present disclosure may provide a method for performing authentication of a terminal in a wireless communication system.

The present disclosure may provide a method for notifying expiry of an expiration time of an application key when a terminal is provided with an application service through the application key based on AKMA in a wireless communication system.

The present disclosure may provide a method for refreshing an application key when an application session is terminated based on expiry of an expiration time of the application key in a wireless communication system.

The present disclosure may provide a method for performing new authentication and configuring a new application key when an application session is terminated based on expiry of an expiration time of an application key in a wireless communication system.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

### Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.
FIG. 1 is a view illustrating various reference points.
FIG. 2 is a view illustrating an example of a network structure of an evolved universal terrestrial radio access network (E-UTRAN) to which the present disclosure is applicable.
FIG. 3 is a view illustrating a general E-URTAN and an example of an architecture of an evolved packet core (EPC).
FIG. 4 is a view illustrating an example of a structure of a radio interface protocol in a control plane between user equipment (UE) and evolved node B (eNB).
FIG. 5 is a view illustrating an example of a structure of a radio interface protocol in a user plane between UE and eNB.
FIG. 6 is a view illustrating an example of an architecture of a general new radio (NR)-radio access network (RAN).
FIG. 7 is a view illustrating an example of functional separation of a general NG-RAN and a 5th generation core (5GC).
FIG. 8 is a view illustrating an example of a general architecture of a 5th generation (5G) system.
FIG. 9 is a view illustrating an example of a wireless device applicable to the present disclosure.
FIG. 10 is a view showing a method for performing authentication based on an EAP AKA' scheme that is applicable to the present disclosure.
FIG. 11 is a view showing a method for performing authentication based on a 5G AKA' scheme that is applicable to the present disclosure.
FIG. 12 is a view showing a method for notifying expiry of an expiration time of an application key that is applicable to the present disclosure.
FIG. 13 is a view showing an AAnF selection and search procedure that is applicable to the present disclosure.
FIG. 14 is a view showing a method for initiating AKMA that is applicable to the present disclosure.
FIG. 15 is a view showing a method for notifying expiry of an expiration time of an application key that is applicable to the present disclosure.
FIG. 16 is a view showing a method for notifying expiry of an expiration time of an application key that is applicable to the present disclosure.
FIG. 17 is a view showing a method for refreshing an existing application key based on termination of an application session that is applicable to the present disclosure.
FIG. 18 is a view showing a method for performing new authentication and generating an application key based on termination of an application session that is applicable to the present disclosure.
FIG. 19 is a view showing a method for performing new authentication and generating an application key based on termination of an application session that is applicable to the present disclosure.
FIG. 20 is a flowchart showing a method for delivering expiry information of an expiration time of an application key that is applicable to the present disclosure.
FIG. 21 is a flowchart showing a method for delivering expiry information of an expiration time of an application key that is applicable to the present disclosure.

### Mode for Invention

Following embodiments are achieved by combination of structural elements and features of the present disclosure in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present disclosure. The order of operations described in the embodiments of the present disclosure may be changed. Some structural elements or features of one embodiment may be included in another embodiment, or may be replaced with corresponding structural elements or features of another embodiment.

In the description of the drawings, procedures or steps which render the scope of the present disclosure unnecessarily ambiguous will be omitted and procedures or steps which can be understood by those skilled in the art will be omitted.

In the entire specification, when a certain portion "comprises" or "includes" a certain component, this indicates that the other components are not excluded, but may be further included unless specially described. The terms "unit", "-or/er" and "module" described in the specification indicate a unit for processing at least one function or operation, which may be implemented by hardware, software and a combination thereof. In addition, "a or an", "one", "the" and similar related words may be used as the sense of including both a singular representation and a plural representation unless it is indicated in the context describing the present specification (especially in the context of the following claims) to be different from this specification or is clearly contradicted by the context.

In this specification, the embodiments of the present disclosure are described with focus on the relationship of data reception and transmission between a base station and a mobile station. Herein, the base station means a terminal node of a network that performs direct communication with the mobile station. In this document, a specific operation, which is described to be performed by a base station, may be performed by an upper node of the base station in some cases.

That is, in a network consisting of a plurality of network nodes including a base station, various operations for communicating with a mobile station may be performed by the base station or network nodes other than the base station. Herein, "base station" may be replaced by such terms as "fixed station", "Node B", "eNode B(eNB)", "gNode B(gNB)", "ng-eNB", "advanced base station(ABS)", or "access point".

Also, in the embodiments of the present disclosure, "terminal" may be replaced by such terms as "user equipment(UE)", "mobile station(MS)", "subscriber station(SS)", "mobile subscriber station(MSS)", "mobile terminal" or "advanced mobile station(AMS)".

In addition, a transmission end refers to a fixed and/or mobile node that provides a data service or a voice service, and a reception end means a fixed and/or mobile node that receives a data service or a voice service. Accordingly, in the case of an uplink, a mobile station may be a transmission end, and a base station may be a reception end. Likewise, in the case of a downlink, a mobile station may be a reception end, and a base station may be a transmission end.

The embodiments of the present disclosure may be supported by standard documents disclosed in at least one of the following radio access systems: an IEEE 802 xx system, a 3rd generation partnership project (3GPP) system, a 3GPP long term evolution (LTE) system, a 3GPP 5th generation (5G) new radio (NR) system **and a 3GPP2** system, and in particular, the embodiments of the present disclosure may be supported by the following documents: 3GPP TS (technical specification) 38.211, 3GPP TS 38.212, 3GPP TS 38.213, 3GPP TS 38.321, and 3GPP TS 38.331.

In addition, the embodiments of the present disclosure are applicable to another radio access system but is not limited to the above-described system. As an example, they are applicable to a system applied after a 3GPP 5G NR system and are not limited to a specific system.

That is, obvious steps and parts not described in the embodiments of the present disclosure may be described with reference to the above documents. In addition, all the terms disclosed in this document may be explained by the standard document.

Hereinafter, a preferred embodiment according to the present disclosure will be described in detail with reference to accompanying drawings. Detailed descriptions disclosed below together with accompanying drawings are intended to describe example embodiments of the present disclosure and not intended to show any sole embodiment in which a technical configuration of the present disclosure can be implemented.

In addition, specific terms used in the embodiments of the present disclosure are provided to help understand the present disclosure, and such specific terms may be used in any other modified forms without departing from the technical idea of the present disclosure.

The following technology may be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA) and the like.

For clarity of explanation, the descriptions below are based on a 3GPP communication system (e.g. LTE, NR and the like), but the technical idea of the present disclosure is not limited thereto. LTE may mean a technology after 3GPP TS 36.xxx Release 8. Specifically, the LTE technology after 3GPP TS 36.xxx Release 10 may be referred to as LTE-A, and the one after 3GPP TS 36.xxx Release 13 may be referred to as LTE-A pro. 3GPP NR may mean a technology after TS 38.xxx Release 15. 3GPP 6G may mean a technology after TS Release 17 and/or Release 18. "xxx' means the specific number of a standard document. LTE/NR/6G may be referred to collectively as 3GPP system.

Contents described in standard documents released earlier than the present disclosure may be referred to for the background art, terms and abbreviations used in the present disclosure. As an example, 36.xxx and 38.xxx standard documents may be referred to.

For terms, abbreviations, and other backgrounds that may be used in this document, reference may be made to the following standard document descriptions published prior to this document. In particular, terms, abbreviations, and other background technologies related to LTE/EPS (Evolved Packet System) may refer to 36.xxx series, 23.xxx series, and 24.xxx series, and NR (new radio)/5GS related terms and abbreviations and other backgrounds may refer to the 38.xxx series, 23.xxx series and 24.xxx series.

### 3GPP LTE/EPS

3GPP TS 36.211: Physical channels and modulation
3GPP TS 36.212: Multiplexing and channel coding
3GPP TS 36.213: Physical layer procedures
3GPP TS 36.214: Physical layer; Measurements
3GPP TS 36.300: Overall description
3GPP TS 36.304: User Equipment (UE) procedures in idle mode
3GPP TS 36.306: User Equipment (UE) radio access capabilities
3GPP TS 36.314: Layer 2 - Measurements
3GPP TS 36.321: Medium Access Control (MAC) protocol
3GPP TS 36.322: Radio Link Control (RLC) protocol
3GPP TS 36.323: Packet Data Convergence Protocol (PDCP)
3GPP TS 36.331: Radio Resource Control (RRC) protocol
3GPP TS 36.413: S1 Application Protocol (S1AP)
3GPP TS 36.423: X2 Application Protocol (X2AP)
3GPPP TS 22.125: Unmanned Aerial System support in 3GPP; Stage 1
3GPP TS 23.303: Proximity-based services (Prose); Stage 2
3GPP TS 23.401: General Packet Radio Service (GPRS) enhancements for Evolved Universal Terrestrial Radio Access Network (E-UTRAN) access
3GPP TS 23.402: Architecture enhancements for non-3GPP accesses
3GPP TS 23.286: Application layer support for V2X services; Functional architecture and information flows
3GPP TS 24.301: Non-Access-Stratum (NAS) protocol for Evolved Packet System (EPS); Stage 3
3GPP TS 24.302: Access to the 3GPP Evolved Packet Core (EPC) via non-3GPP access networks; Stage 3
3GPP TS 24.334: Proximity-services (ProSe) User Equipment (UE) to ProSe function protocol aspects; Stage 3
3GPP TS 24.386: User Equipment (UE) to V2X control function; protocol aspects; Stage 3

### 3GPP NR/5GS

3GPP TS 38.211: Physical channels and modulation
3GPP TS 38.212: Multiplexing and channel coding
3GPP TS 38.213: Physical layer procedures for control
3GPP TS 38.214: Physical layer procedures for data
3GPP TS 38.215: Physical layer measurements
3GPP TS 38.300: NR and NG-RAN Overall Description
3GPP TS 38.304: User Equipment (UE) procedures in idle mode and in RRC inactive state
3GPP TS 38.321: Medium Access Control (MAC) protocol
3GPP TS 38.322: Radio Link Control (RLC) protocol
3GPP TS 38.323: Packet Data Convergence Protocol (PDCP)
3GPP TS 38.331: Radio Resource Control (RRC) protocol
3GPP TS 37.324: Service Data Adaptation Protocol (SDAP)
3GPP TS 37.340: Multi-connectivity; Overall description
3GPP TS 23.501: System Architecture for the 5G System
3GPP TS 23.502: Procedures for the 5G System
3GPP TS 23.503: Policy and Charging Control Framework for the 5G System; Stage 2
3GPP TS 24.501: Non-Access-Stratum (NAS) protocol for 5G System (5GS); Stage 3
3GPP TS 24.502: Access to the 3GPP 5G Core Network (5GCN) via non-3GPP access networks
3GPP TS 24.526: User Equipment (UE) policies for 5G System (5GS); Stage 3

### 3GPP V2X

3GPP TS 23.285: Architecture enhancements for V2X services
3GPP TR 23.786: Evolved Packet System (EPS) and the 5G System (5GS) to support advanced V2X services
3GPP TS 23.287: Architecture enhancements for 5G System (5GS) to support Vehicle-to-Everything (V2X) services
3GPP TS 24.587: Vehicle-to-Everything (V2X) services in 5G System (5GS); Protocol aspects; Stage 3
3GPP TS 24.588: Vehicle-to-Everything (V2X) services in 5G System (5GS); User Equipment (UE) policies; Stage 3

Hereinafter, the present disclosure is described based on the terms defined as above.

Three major requirement areas of 5G include (1) an enhanced mobile broadband (eMBB) area, (2) a massive machine type communication (mMTC) area, and (3) an ultra-reliable and low latency communications (URLLC) area.

Some use cases may require multiple areas for optimization, and other use case may be focused on only one key performance indicator (KPI). 5G supports these various use cases in a flexible and reliable method.

### 5G System Architecture to which the Present Disclosure is Applicable

A 5G system is an advanced technology from 4G LTE mobile communication technology and supports a new radio access technology (RAT), extended long term evolution (eLTE) as an extended technology of LTE, non-3GPP access (e.g., wireless local area network (WLAN) access), etc. through the evolution of the existing mobile communication network structure or a clean-state structure.

The 5G system is defined based on a service, and an interaction between network functions (NFs) in an architecture for the 5G system can be represented in two ways as follows.

Reference point representation: indicates an interaction between NF services in NFs described by a point-to-point reference point (e.g., N11) between two NFs (e.g., AMF and SMF).

Service-based representation: network functions (e.g., AMF) within a control plane (CP) allow other authenticated network functions to access its services. The representation also includes a point-to-point reference point, if necessary.

### Overview of 3GPP System

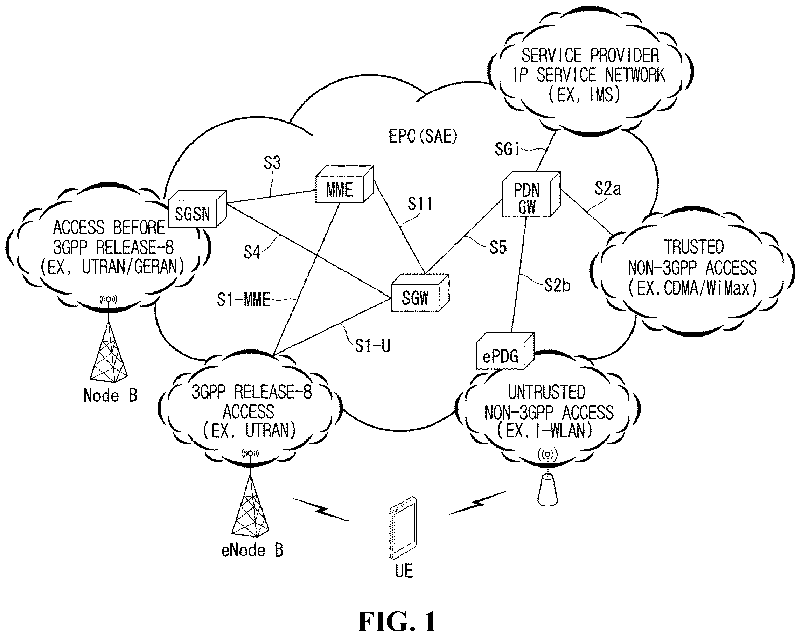

FIG. 1 illustrates various reference points.

An example of the network structure of FIG. 1 discloses an LTE/EPS-based network structure, and may operate with reference to matters described in standard documents published before this document. In the network structure of FIG. 1 , at least one of SGW, PDN GW, MME, SGSN, and ePDG entities may operate with reference to matters described in standard documents published before this document. In addition, S1-MME, S1-U, S2a, S2b, S3, S4, S5, S11, and SGi may exist as interfaces between each entity, which are described in the standard document published before this document. can do. In addition, other entities and interfaces may be configured with reference to matters described in standard documents published before this document described above, and are not limited to specific forms.

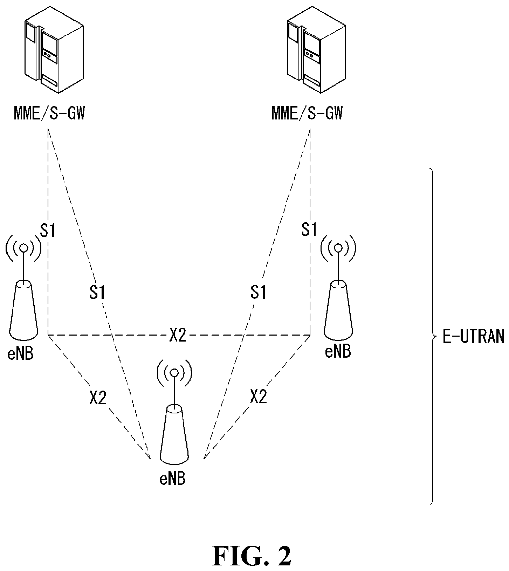

FIG. 2 illustrates an example of a network structure of an evolved universal terrestrial radio access network (E-UTRAN) to which the present disclosure is applicable.

An E-UTRAN system is an evolved version of the existing UTRAN system and may be, for example, 3GPP LTE/LTE-A system. Communication networks are widely deployed to provide various communication services such as voice (e.g., voice over Internet protocol (VoIP)) through IMS and packet data.

Referring to FIG. 2, an E-UMTS network includes an E-UTRAN, an EPC, and one or more UEs. The E-UTRAN consists of eNBs that provide control plane and user plane protocols to the UE, and the eNBs are interconnected with each other by means of the X2 interface, and reference may be made to matters described in standard documents published before this document.

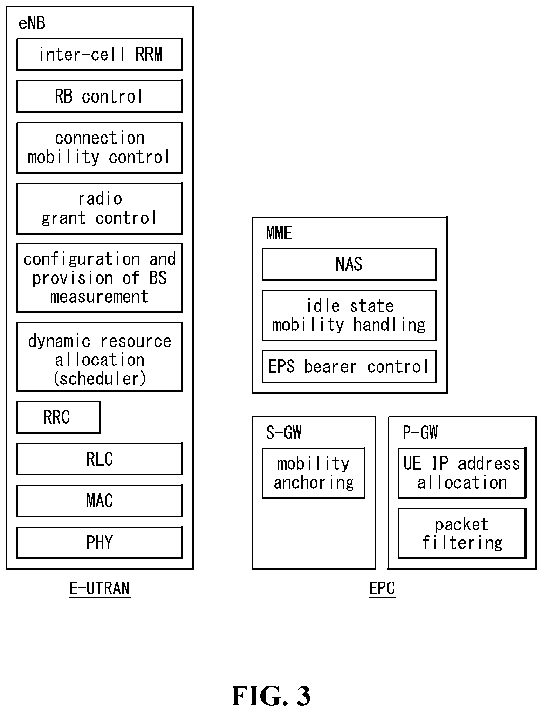

FIG. 3 is a view illustrating a general E-URTAN and an example of an architecture of an evolved packet core (EPC).

As illustrated in FIG. 3, the eNB can perform functions such as routing to gateway while radio resource control (RRC) connection is activated, scheduling and transmission of paging messages, scheduling and transmission of a broadcast channel (BCH), dynamic allocation of resources in uplink and downlink to the UE, configuration and provision for the measurement of the eNB, radio bearer control, radio admission control, and connection mobility control. The eNB can perform functions such as paging situation in the EPC, management of an LTE IDLE state, ciphering of a user plane, SAE bearer control, and ciphering and integrity protection of NAS signaling.

Annex J of 3GPP TR 23.799 shows various architectures combining 5G and 4G. And 3GPP TS 23.501 shows an architecture using NR and NGC.

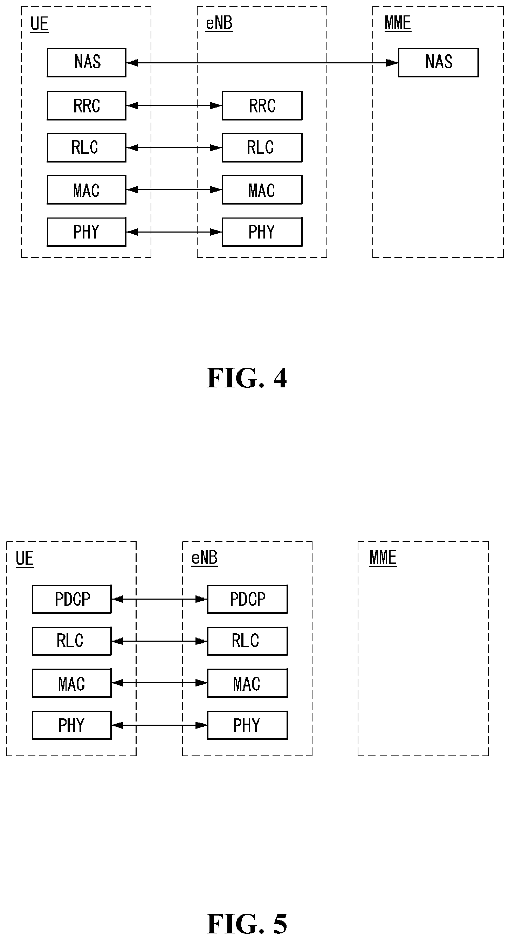

FIG. 4 is a view illustrating an example of a structure of a radio interface protocol in a control plane between user equipment (UE) and evolved node B (eNB), and FIG. 5 is view illustrating an example of a structure of a radio interface protocol in a user plane between UE and eNB.

The radio interface protocol is based on 3GPP radio access network standard. The radio interface protocol horizontally consists of a physical layer, a data link layer, and a network layer, and is vertically divided into a user plane for data information transmission and a control plane for control signaling delivery.

The protocol layers may be divided into L1 (first layer), L2 (second layer), and L3 (third layer) based upon three lower layers of an open system interconnection (OSI) standard model that is well known in the art of communication systems, and it is possible to refer to the matters described in the standard document published before this document described above.

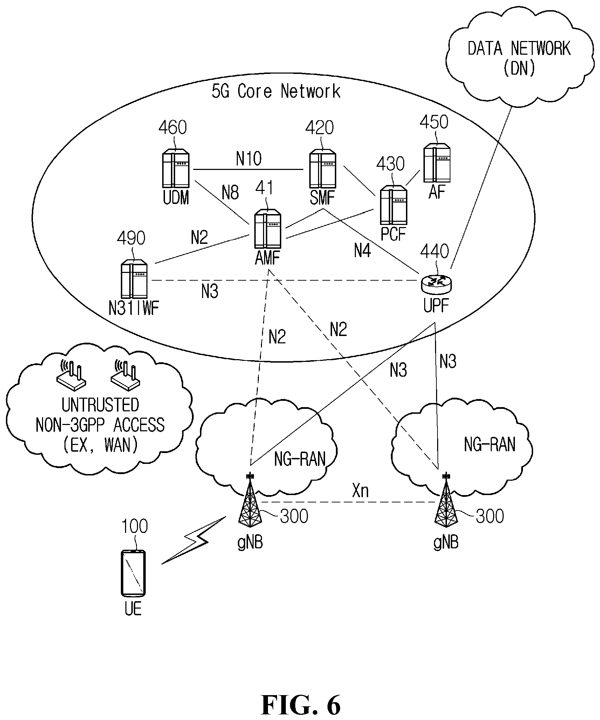

FIG. 6 is a view illustrating an example of a wireless communication system that is applied to the present disclosure.

5GC (5G Core) may include various components, part of which are shown in FIG. 6, including an access and mobility management function (AMF) 410, a session management function (SMF) 420, a policy control function (PCF) 430, a Prose user plane function (UPF) 440, an application function (AF) 450, unified data management (UDM) 460, and a non-3GPP interworking function (N3IWF) 490.

A UE 100 is connected to a data network via the UPF 440 through a next generation radio access network (NG-RAN) including the gNB 300. The UE 100 may be provided with a data service even through untrusted non-3GPP access, e.g., a wireless local area network (WLAN). In order to connect the non-3GPP access to a core network, the N3IWF 490 may be deployed.

The N3IWF 490 performs a function of managing interworking between the non-3GPP access and the 5G system. When the UE 100 is connected to non-3GPP access (e.g., WiFi referred to as IEEE 801.11), the UE 100 may be connected to the 5G system through the N3IWF 490. The N3IWF 490 performs control signaling with the AMF 410 and is connected to the UPF 440 through an N3 interface for data transmission.

The AMF 410 may manage access and mobility in the 5G system. The AMF 410 may perform a function of managing (non-access stratum) NAS security. The AMF 410 may perform a function of handling mobility in an idle state.

The UPF 440 performs a function of gateway for transmitting and receiving user data. The UPF node 440 may perform the entirety or a portion of a user plane function of a serving gateway (S-GW) and a packet data network gateway (P-GW) of 4G mobile communication.

The UPF 440 is a component that operates as a boundary point between a next generation radio access network (NG-RAN) and the core network and maintains a data path between the gNB 300 and the SMF 420. In addition, when the UE 100 moves over an area served by the gNB 300, the UPF 440 serves as a mobility anchor point. The UPF 440 may perform a function of handling a PDU. For mobility within the NG-RAN (which is defined after 3GPP Release-15), the UPF 440 may route packets. In addition, the UPF 440 may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF 440 may correspond to a termination point of a data interface toward the data network.

The PCF 430 is a node that controls an operator's policy. The AF 450 is a server for providing various services to the UE 100. The UDM 460 is a server that manages subscriber information, such as home subscriber server (HSS) of 4G mobile communication. The UDM 460 stores and manages the subscriber information in a unified data repository (UDR).

The SMF 420 may perform a function of allocating an Internet protocol (IP) address of the UE 100. In addition, the SMF 420 may control a packet data unit (PDU) session.

For convenience of explanation, hereinafter, reference numerals may be omitted for AMF 410, SMF 420, PCF 430, UPF 440, AF 450, UDM 460, N3IWF 490, gNB 300, or UE 100, which may operate with reference to contents described in standard documents released earlier than the present document.

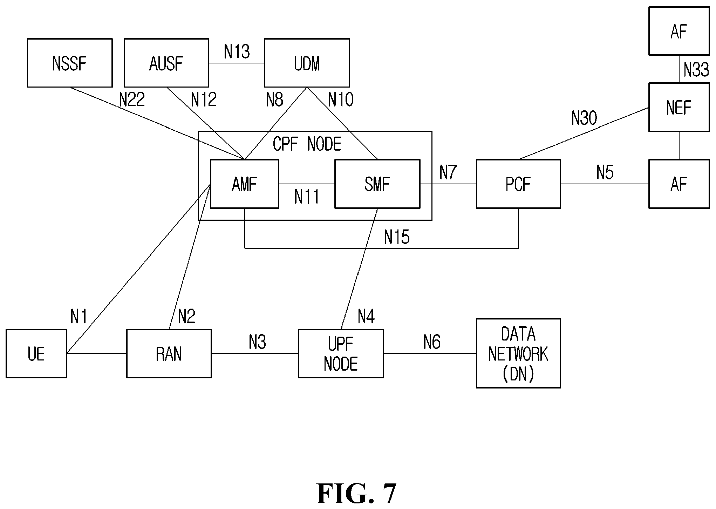

FIG. 7 is a view illustrating an example expressing a structure of a wireless communication system, which is applied to the present disclosure, from a node perspective.

Referring to FIG. 7, a UE is connected to a data network (DN) through a next generation RAN. A control plane function (CPF) node performs all or a part of the functions of a mobility management entity (MME) of 4G mobile communication and all or a part of serving gateway (S-GW) and PDN gateway (P-GW) functions. The CPF node includes AMF and SMF.

A UPF node performs a function of a gateway in which data of a user is transmitted and received.

An authentication server function (AUSF) authenticates and manages a UE. A network slice selection function (NSSF) is a node for network slicing described below.

A network exposure function (NEF) provides a mechanism that safely opens the service and function of 5G core.

Reference points in FIG. 7 are described as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in a non-roaming scenario and a reference point between AMF and PCF of a visited network in a roaming scenario. N16 represents a reference point between SMFs. N22 represents a reference point between AMF and NSSF. N30 represents a reference point between PCF and NEF. N33 may represent a reference point between AF and NEF, and the above-described entity and interface may be configured with reference to contents described in standard documents released earlier than the present document.

A radio interface protocol is based on the 3GPP radio access network standard. The radio interface protocol is horizontally divided into a physical layer, a data link layer, and a network layer, and is vertically divided into a user plane for transmission of data information and a control plane for transfer of control signal (signaling).

The protocol layers may be divided into L1 (layer-1), L2 (layer-2), and L3 (layer-3) based on the three lower layers of the open system interconnection (OSI) reference model widely known in communication systems.

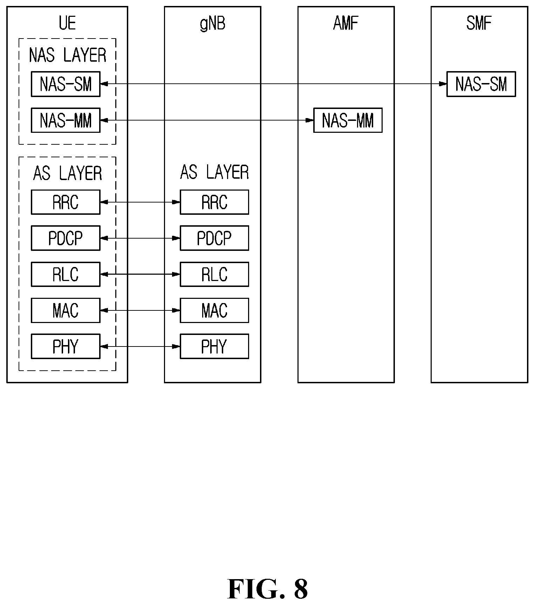

Hereinafter, the present disclosure will describe each layer of a radio protocol. FIG. 8 is a view illustrating an example of a radio interface protocol between UE and gBN.

Referring to FIG. 8, an access stratum (AS) layer may include a physical (PHY) layer, a medium access control layer, a radio link control (RLC) layer, a packet data convergence protocol (PDCP) layer, and a radio resource control (RRC) layer, and an operation based on each layer may be performed with reference to contents described standard documents released earlier than the present document.

### Communication system applicable to the present disclosure

Although not limited thereto, various descriptions, functions, procedures, proposals, methods and/or operation flowcharts disclosed in the present disclosure are applicable to various fields requiring wireless communication/connection (e.g., 5G) between devices.

Hereinafter, it will be described in greater detail with reference to the drawings. In the following drawings/description, the same reference numerals may denote the same or corresponding hardware blocks, software blocks or functional blocks unless otherwise stated.

### Communication system applicable to the present disclosure

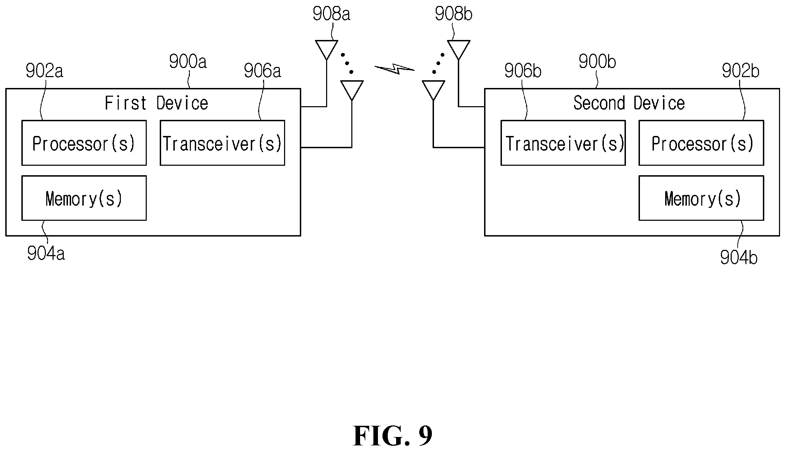

FIG. 9 is a view showing an example of a wireless device applicable to the present disclosure.

Referring to FIG. 9, a first wireless device 900a and a second wireless device 900b may transmit and receive radio signals through various radio access technologies (e.g., LTE or NR). Here, {the first wireless device 900a, the second wireless device 900b} may correspond to {the wireless device 100x, the base station 90} and/or {the wireless device 100x, the wireless device 100x}.

The first wireless device 900a may include one or more processors 902a and one or more memories 904a and may further include one or more transceivers 906a and/or one or more antennas 908a. The processor 902a may be configured to control the memory 904a and/or the transceiver 906a and to implement descriptions, functions, procedures, proposals, methods and/or operational flowcharts disclosed herein. For example, the processor 902a may process information in the memory 904a to generate first information/signal and then transmit a radio signal including the first information/signal through the transceiver 906a. In addition, the processor 902a may receive a radio signal including second information/signal through the transceiver 906a and then store information obtained from signal processing of the second information/signal in the memory 904a. The memory 904a may be coupled with the processor 902a, and store a variety of information related to operation of the processor 902a. For example, the memory 904a may store software code including instructions for performing all or some of the processes controlled by the processor 902a or performing the descriptions, functions, procedures, proposals, methods and/or operational flowcharts disclosed herein. Here, the processor 902a and the memory 904a may be part of a communication modem/circuit/chip designed to implement wireless communication technology (e.g., LTE or NR). The transceiver 906a may be coupled with the processor 902a to transmit and/or receive radio signals through one or more antennas 908a. The transceiver 906a may include a transmitter and/or a receiver. The transceiver 906a may be used interchangeably with a radio frequency (RF) unit. In the present disclosure, the wireless device may refer to a communication modem/circuit/chip.

The second wireless device 900b may include one or more processors 902b and one or more memories 904b and may further include one or more transceivers 906b and/or one or more antennas 908b. The processor 902b may be configured to control the memory 904b and/or the transceiver 906b and to implement the descriptions, functions, procedures, proposals, methods and/or operational flowcharts disclosed herein. For example, the processor 902b may process information in the memory 904b to generate third information/signal and then transmit the third information/signal through the transceiver 906b. In addition, the processor 902b may receive a radio signal including fourth information/signal through the transceiver 906b and then store information obtained from signal processing of the fourth information/signal in the memory 904b. The memory 904b may be coupled with the processor 902b to store a variety of information related to operation of the processor 902b. For example, the memory 904b may store software code including instructions for performing all or some of the processes controlled by the processor 902b or performing the descriptions, functions, procedures, proposals, methods and/or operational flowcharts disclosed herein. Herein, the processor 902b and the memory 904b may be part of a communication modem/circuit/chip designed to implement wireless communication technology (e.g., LTE or NR). The transceiver 906b may be coupled with the processor 902b to transmit and/or receive radio signals through one or more antennas 908b. The transceiver 906b may include a transmitter and/or a receiver. The transceiver 906b may be used interchangeably with a radio frequency (RF) unit. In the present disclosure, the wireless device may refer to a communication modem/circuit/chip.

In addition, the structure of a wireless device applicable to the present disclosure is not limited to FIG. 9, and may be configured in various forms. In particular, the present disclosure may be applied to a wireless device that performs an operation for transmitting and/or receiving a wireless signal, and is not limited to a specific form.

As an example, a terminal may perform a mutual authentication procedure to access a network. In a new communication system (e.g., 5G system), mutual authentication between a terminal and a network may be performed using a 5G authentication key agreement (AKA) scheme or an EAP AKA' scheme.

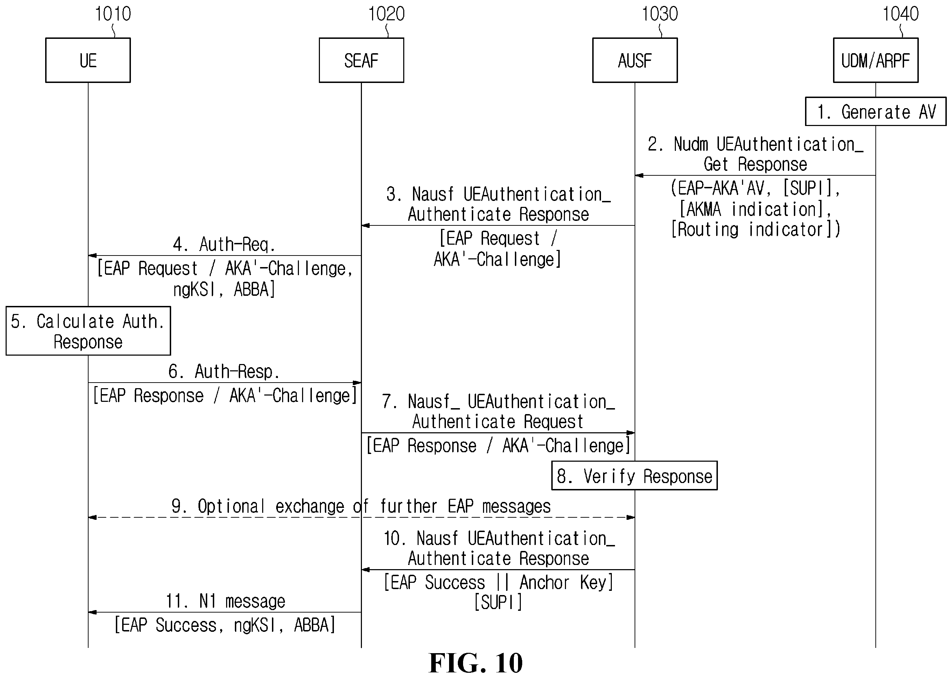

As an example, FIG. 10 is a view showing a method for performing authentication based on an EAP AKA' scheme according to an embodiment of the present disclosure. Referring to FIG. 10, a user data management (UDM)/authentication credential repository and processing function (ARPF) 1040 may generate an authentication vector (AV), and a detailed configuration related to authentication vector generation will be describe below. Next, the UDM/ARPF 1040 may calculate CK' and IK' based on a cipher key (CK) and an integrity key (IK) and deliver AV', which includes RAND, AUTN, XRES, CK' and IK', to an authentication server function (AUSF) 1030. As an example, the UDM/ARPF 1040 may deliver AV' to the AUSF 1030 as an authentication response to an authentication request of the AUSF 1030. In addition, the AUSF 1030 may perform an authentication request to the UDM/ARPF 1040 based on an authentication request of a terminal but is not limited to the above-described embodiment. In addition, as an example, the above-described authentication response may further include at least any one or more of an SUPI, an AKMA indicator, and a routing indicator based on the authentication request of the AUSF 1030, but is not limited to the above-described embodiment.

Next, the AUSF 1030 may transmit an EAP request and AKA'-Challenge based on AV' to a security anchor function (SEAF) 1020. As an example, AKA'-Challenge may be a value that is generated based on a root key of a user ID. Herein, AUTN may be generated and verified based on AKA'-Challenge. Next, the SEAF 1020 may transmit an authentication request message including the EAP request and AKA'-Challenge to a terminal 1020 through an NAS message. As an example, the authentication request message may further include ngKSI and an ABBA parameter. Herein, ngKSI may be a value for identifying a security context that is generated when an AMF succeeds in authentication. When the terminal 1010 receives the authentication request message, the terminal 1010 may generate AUTN by a same algorithm as the network through a key held by the terminal and perform authentication based on whether or not the generated AUTN and received AUTN are identical with each other. Next, the terminal 1010 may transmit an authentication response, which includes an EAP response and AKA'-Challenge, to the SEAF 1020 based on a value that is generated through the key that the terminal holds. The SEAF 1020 may also transmit the authentication response including the EAP response and AKA'-Challenge to the AUSF 1030, and the AUSF 1030 may perform authentication through verification for the value generated by the terminal, so that mutual authentication may be performed. Next, additional authentication between the AUSF 1030 and the terminal 1010 may be performed but may not be limited thereto.

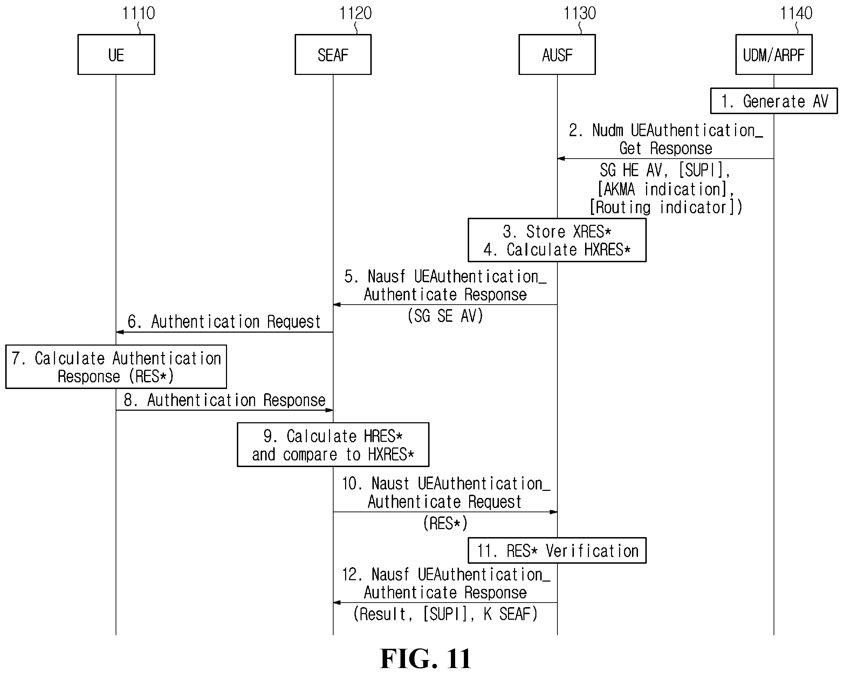

In addition, as an example, FIG. 11 is a view showing a method for performing authentication based on a 5G AKA' scheme according to an embodiment of the present disclosure.

Referring to FIG. 11, a UDM/ARPF 1140 may generate an authentication vector (AV). As an example, the authentication vector may be a 5G HE AV, and the 5G HE AV may be generated through RAND, AUTN, XRES* and K_AUSF. Next, the UDM/ARPF 1140 may deliver the 5G HE AV to an AUSF 1130. As an example, the UDM/ARPF 1140 may deliver the 5G HE AV to the AUSF 1130 as an authentication response to an authentication request of the AUSF 1130. The AUSF 1130 may perform the authentication request to the UDM/ARPF 1140 based on an authentication request of the terminal but is not limited to the above-described embodiment. In addition, the above-described authentication response may further include at least any one or more of an SUPI, an AKMA indicator, and a routing indicator based on the authentication request of the AUSF 1130, but is not limited to the above-described embodiment.

Next, the AUSF 1130 may generate a 5G AV based on the 5G HE AV. Herein, the AUSF 1130 may calculate HXRES* through XRES* and calculate K_SEAF through K_AUSF. The AUSF 1130 may generate the 5G AV by replacing XRES* by HXRES* and replacing K_AUSF by K_ SEAF in the 5G HE AV. Next, the AUSF 1130 may generate a 5G SE AV including RAND, AUTH and HXRES* and deliver the 5G SE AV to the SEAF 1120, and the SEAF 1020 may transmit an authentication request message including RAND and AUTN to a terminal 1110 through an NAS message. As an example, the authentication request message may further include ngKSI and an ABBA parameter. Herein, ngKSI may be a value for identifying a security context that is generated when the terminal 1110 and an AMF succeed in authentication. When the terminal 1110 receives the authentication request message, the terminal 1110 may generate AUTN by a same algorithm as the network through a key held by the terminal and perform authentication based on whether or not the generated AUTN is identical.

Next, the terminal 1110 may generate a RES* value through a key held by the terminal and transmit an authentication response include RES* to the SEAF 1120. The SEAF 1120 may calculate HRES* based on RES* and compare HRES* with the above-described HXRES* to see whether or not they are identical. In case the two values are identical, the SEAF 1120 may determine that the authentication is successful and transmit an authentication response including RES* to the AUSF 1130. When receiving the authentication response including RES*, the AUSF 1130 may perceive that mutual authentication is performed.

Authentication and key management for applications (AKMA) may be a system capable of generating a security key (an application key) that is necessary for an application and terminal to perform encrypted communication. Herein, the application key may be generated based on mutual authentication between the terminal and a mobile communication network and a network root key (K_{AUSF}) that is generated after the authentication is performed. The application key may include an expiration time for enhancing security. In case the expiration time expires, the application key may not be used any more. As an example, in case an expiration time of an application key expires, it may be handled independently in an application layer based on any one of a method of blocking access of a terminal in an application server and a method of refreshing the application key.

However, in case an application key is used as a security key based on an AKMA system, when an expiration time of the application key expires, it may be unclear whether the existing key is to be refreshed or a procedure of generating a new application key (security key) is to be performed. That is, in case an expiration time of an application key as a security key expires based on an AKMA system, it may be necessary to determine whether to refresh the existing key or perform a procedure for generating a new security key. In addition, as an example, it may be necessary to determine which of a terminal and a network will initiate an authentication procedure to generate a new security key, and a method related to this will be described below.

As an example, a K_{AUSF} may be generated after primary authentication of a terminal is successful based on an AKMA system. Each of a network and the terminal may generate a K_{AKMA}, which may be used later as a root key to generate an application key, and A-KID capable of referring to the K_{AKMA} may be generated together.

Next, the K_{AKMA} generated in an AUSF may be delivered to an AKMA anchor function (AAnF). As an example, the AUSF may include SUPI, A-KID and the K_{AKMA} in an anchor key registration request and deliver the anchor key registration request to the AAnF and receive an anchor key registration response from the AAnF.

In addition, the terminal may generate a K_{AF} from the K_{AKMA} in advance. The terminal may request an application function (AF) to generate an application session by including A-KID. The AF may verify A-KID included in the application session generation request and check a security context corresponding to A-KID.

As an example, in case there is no corresponding security context, the AF may request the AAnF to generate a new K_{AF}. Next, the AAnF may generate a K_{AKMA} based on the new K_{AF} and set an expiration time of the K_{AF} and send the expiration time together with a response to the AF. Herein, information on the expiration time may not delivered to the terminal. Accordingly, when the expiration time of the K_{AF} expires, the terminal may not perceive the expiry of the expiration time. That is, after the expiration time expires, the terminal may request communication to the AF by using the expired K_{AF}.

Herein, as an example, in case the AF simply rejects the communication request of the terminal after the expiry of the expiration time of the K_{AF}, the terminal may not perceive the reason for rejecting the communication request but attempt communication connection multiple times using a same application key. Thus, inefficiency may occur. In addition, as an example, in case the AF notifies the expiry of the expiration time of the application key while rejecting the communication request of the terminal, a procedure for refreshing the application key or generating a new application key may be needed, which will be described below. That is, hereinafter, a method for an AF to notifying the expiry of an expiration time of a K_{AF} to a terminal and an operation procedure after the notification will be described in case the expiration time of the K_{AF} expires in the AF.

As an example, an AF may inform an AUSF or a terminal of expiry information of an expiration time of a K_{AF} that the AF has. Next, the terminal may request to generate an application session again. In addition, the terminal may reattempt primary authentication for generating a new K_{AF}. Herein, the primary authentication reattempted for generating the new K_{AF} may be triggered by a core network or be triggered by the terminal.

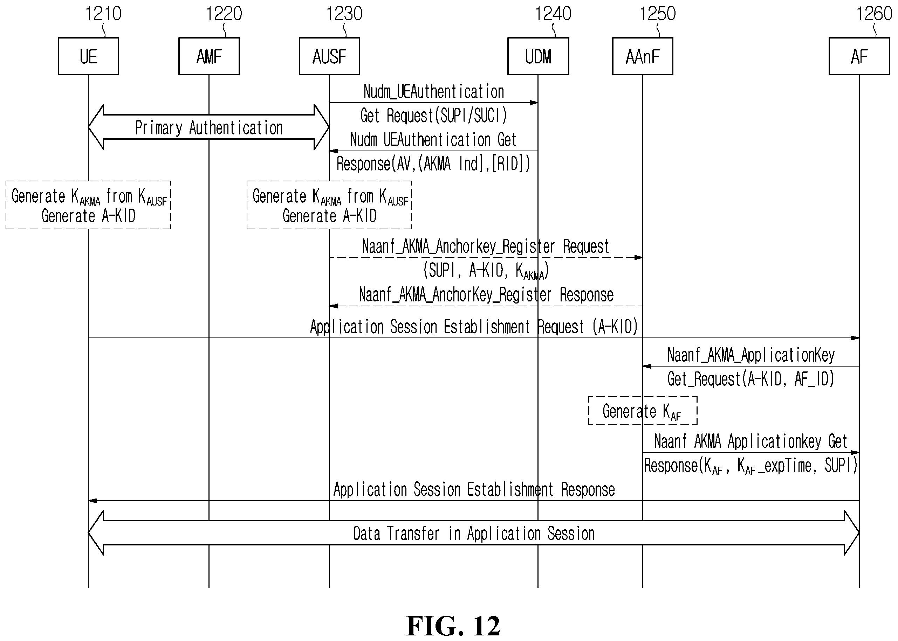

As a concrete example, FIG. 12 a view showing a method for notifying expiry of an expiration time of an application key according to an embodiment of the present disclosure. Referring to FIG. 12, in case primary authentication for a terminal 1210 is performed, an AUSF 1230 may request necessary information and a method for authentication to unified data management (UDM) 1240. Herein, based on a response received from the UDM 1240, the AUSF 1230 may check whether or not an AKMA anchor key should be generated. That is, when responding to the AUSF 1230, the UDM 1240 may provide information regarding whether or not the AKMA anchor key should be generated. As an example, the information regarding whether or not the AKMA anchor key should be generated may be indicated based on a value of "AKMA Ind". That is, in case the value of "AKMA Ind" is included in the response of the UDM 1240, the AUSF 1230 may generate the AKMA anchor key. In case the value of "AKMA Ind" is included in the response of the UDM 1240, RID may also be included in the response, and RID may be delivered to the AUSF 1230 together with the value of "AKMA Ind".

Next, after the primary authentication is successfully completed, when the AUSF 1230 receives the value of "AKMA Ind" from the UDM 1240, the AUSF 1230 may store a K_{AUSF} and generate an AKMA anchor key (K_{AKMA}) and A-KID from K_{AUSF}. After the AKMA anchor key is generated, the AUSF 1230 may select an AAnF 1250 through a function "AAnF search and selection". In addition, the AUSF 1230 may deliver the generated A-KID and K_{AKMA} together with SUPI of the terminal to the AAnF 1250. Next, the AAnF 1250 may indicate termination of the procedure by transmitting a response to the AUSF 1230. The terminal 1210 may generate a K_{AKMA} and A-KID before initiation of an AKMA application and deliver the generated A-KID when requesting an application service to the AF 1260. Herein, as an example, the terminal 1210 may generate a K_{AF} before or after transmitting a request message. In case the AF 1260 does not have a context related to the received A-KID, the AF 1260 may transmit A-KID to the AAnF 1250 to request the K_{AF}. Herein, the AF 1260 may transmit a request by including AF_ID in the request. Next, the AAnF 1250 may perform a procedure for providing a service to the AF. In addition, as an example, the AAnF 1250 may stop the procedure and is not limited to a specific embodiment.

As an example, the AAnF 1250 may verify whether or not AKMA is available, based on presence of an A-KID-related K_{AKMA}. In case there is a K_{AKMA} corresponding to the AAnF 1250, the AAnF 1250 may perform a procedure for providing a service to the AF 1260. Herein, in case the AAnF 1250 does not have a K_{AF}, the AAnF 1250 may generate a K_{AF}. Next, the AAnF 1250 may deliver SUPI, the generated K_{AF}, and a K_{AF} expiration time to the AF 1260. Herein, the AF 1260 may inform the terminal that an application session is completely generated, and data transmission may be performed based on the application session.

On the other hand, in case there is no K_{AKMA} corresponding to the AAnF 1250, the AAnF 1250 may transmit an error response to the AF 1260. Herein, the AF 1260 may give notification including a cause of failure to the terminal, and the terminal may request AKMA as a new application session with latest A-KID to the AF 1260.

After the AF 1260 delivers a response that the application session is completely generated to the terminal 1210, an expiration time of the K_{AF} may expire. Herein, based on the expiration of the K_{AF} and whether or not data is received from the terminal 1210 through the application session, a different operation may be performed, which will be described below.

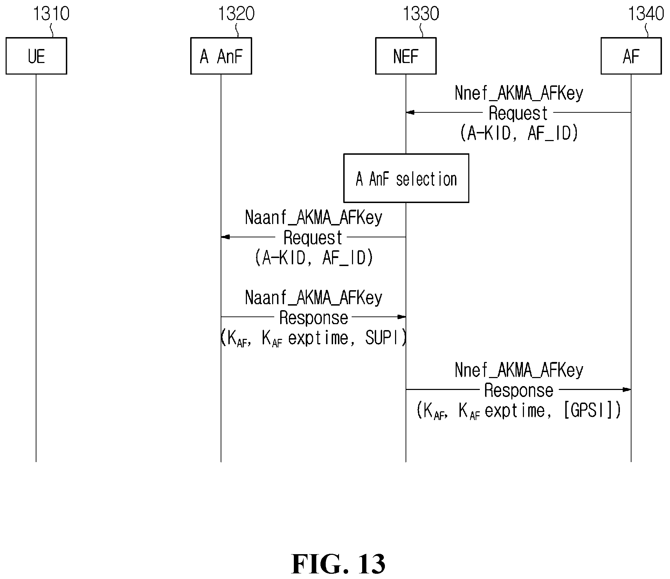

FIG. 13 is a view showing an AAnF selection and search procedure that is applicable to the present disclosure.

Referring to FIG. 13, in case an AF 1340 receives a request for an AKMA key for a terminal 1310 from an AAnF 1320, the above-described AAnF selection and search procedure may be performed. Herein, the AF 1340 may transmit the request to the AAnF 1320 through a network exposure function (NEF) 1330, and a request message may include A-KID and AF_ID. The NEF 1330 may perform a procedure of selecting the AAnF 1320 based on the request message and transmit the request message including A-KID and AF_ID to the selected AAnF 1320. Next, the NEF 1330 may receive a response message including SUPI, a generated K_{AF} and an expiration time of the K_{AF} from the selected AAnF 1330 and deliver the response message to the AF 1330, and a subsequent operation is the same as described above.

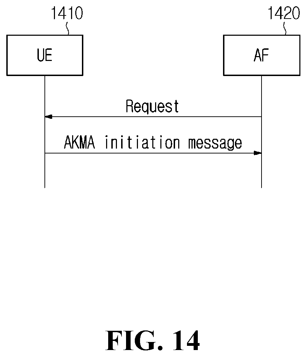

FIG. 14 is a view showing a method for initiating AKMA that is applicable to the present disclosure. Referring to FIG. 14, in case a terminal 1410 does not perceive an AKMA service, the terminal 1410 may deliver an AKMA-related request to an AF 1420. Herein, the AKMA-related request may or may not include AKMA-related parameters. Herein, in case the AF 1420 uses shared keys for AKMA but the request does not include the AKMA-related parameters, the AF 1420 may deliver an AKMA initial message to the terminal 1410, and thus the terminal 1410 may perceive the AKMA service and operate as described above.

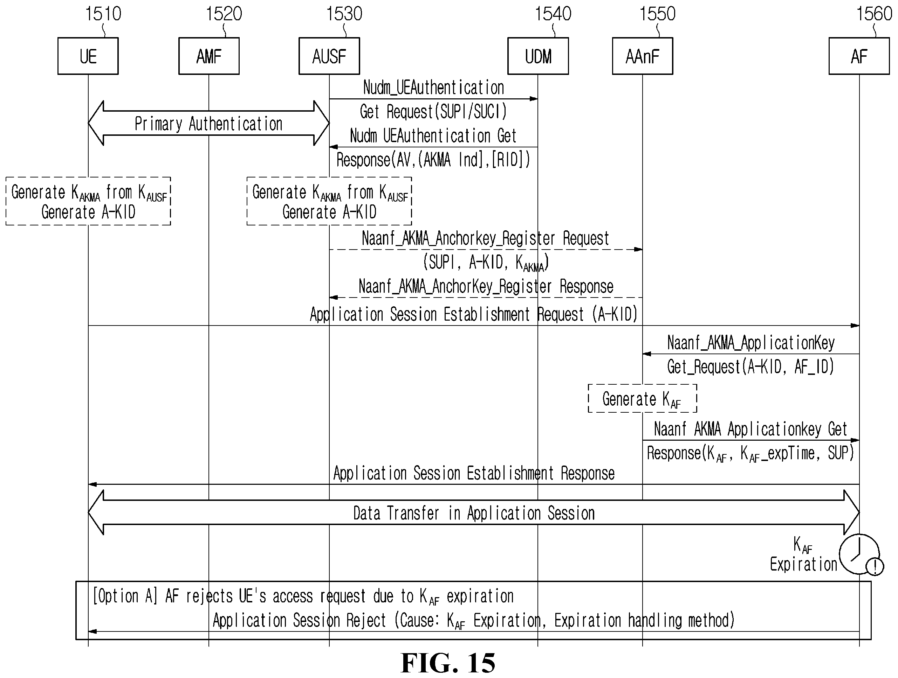

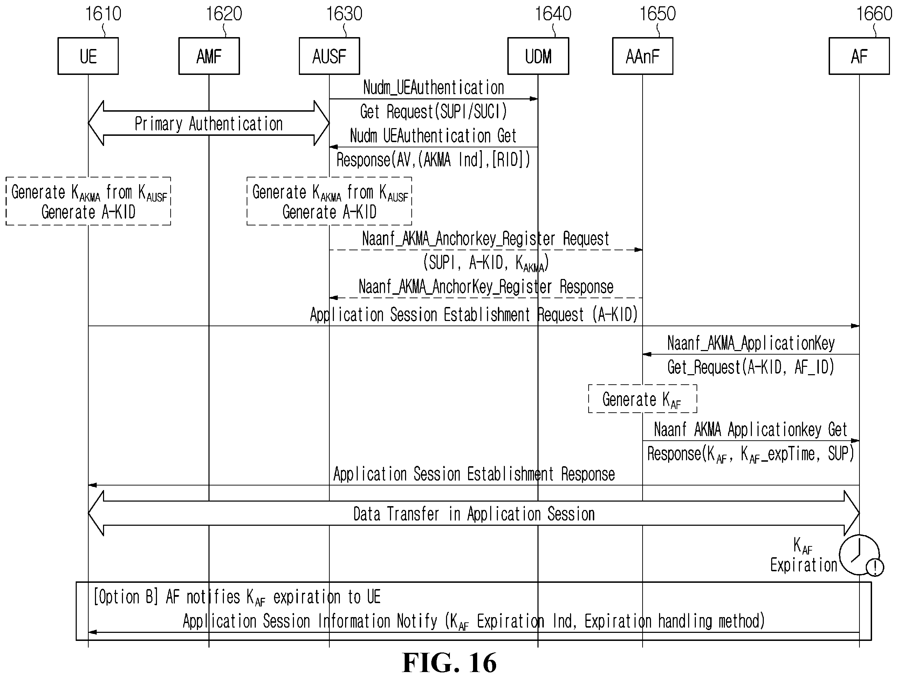

As an example, FIG. 15 and FIG. 16 are views showing a method for notifying expiry of an expiration time of an application key that is applicable to the present disclosure. When a K_{AF} expires, an AF 1560 may not be able to identify data that is received from a terminal 1510 through an application session. Accordingly, in case the terminal 1510 performs transmission to the AF 1560 through the application session using the K_{AF} that is not valid any more, the AF 1560 may reject the session. Herein, the AF 1560 may inform the terminal 1510 of a cause of the K_{AF} expiration and a handling method after expiration and terminate the application session. That is, the AF 1560 may reject an access request of the terminal 1510 based on the expiration of K_{AF}, and an application session reject message may include information on the cause of the expiration of K_{AF} and the handling method after expiration.

As another example, referring to FIG. 16, an AF 1660 may indicate the expiration of K_{AF} and notify information on a handling method after expiration to a terminal 1610 at a time when the K_{AF} expires and then terminate a session.

That is, in case a K_{AF} expiration time expires, an AF may deliver expiry information of the expiration time to a terminal as a response to an access request of the terminal (option A) or deliver the expiry information of the expiration time to the terminal as soon as the K_{AF} expiration time expires (option B).

Based on what is described above, a terminal may perceive that an application session is terminated due to the expiry of a K_{AF} expiration time. Then, the terminal may perform an attempt to reestablish an application session. Herein, the terminal may reestablish the application session by refreshing an existing K_{AF} (option 1) or primary authentication may be triggered by an AF (option 2) or the primary authentication may be triggered by the terminal.

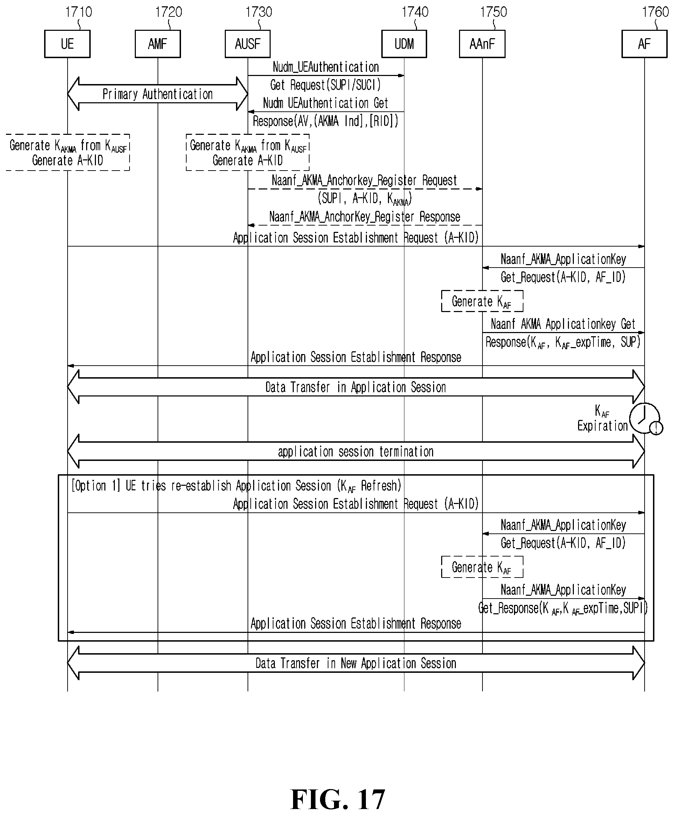

As an example, FIG. 17, FIG. 18 and FIG. 19 are views showing a method for refreshing an existing application key or performing new authentication and generating a new application key based on termination of an application session. Referring to FIG. 17, a terminal 1710 may make a session generation request with existing A-KID to an AF 1760 again. That is, the terminal 1710 may deliver an application session generation request message including the A-KID to an AF 1760. Herein, because the AF 1710 does not have any context related to the existing A-KID, the AF 1710 may request K_{AF} together with A-KID to an AAnF 1750. In addition, a request message, which the AF 1760 transmits to the AAnF 1750, may also include AF_ID. Next, because the AAnF 1750 does not have K_{AF}, the AAnF 1750 may generate K_{AF}. Herein, the K_{AF} may have a same key value as K_{AF} that is generated at a previous step. On the other hand, an expiration time of the K_{AF} may be newly set. Next, the AAnF 1750 may deliver SUPI, the generated K_{AF}, and the new expiration time of the K_{AF} to the AF 1760. Next, the AF 1760 may inform the terminal that an application session is completely generated, and data transmission may be performed based on the application session that is newly generated.

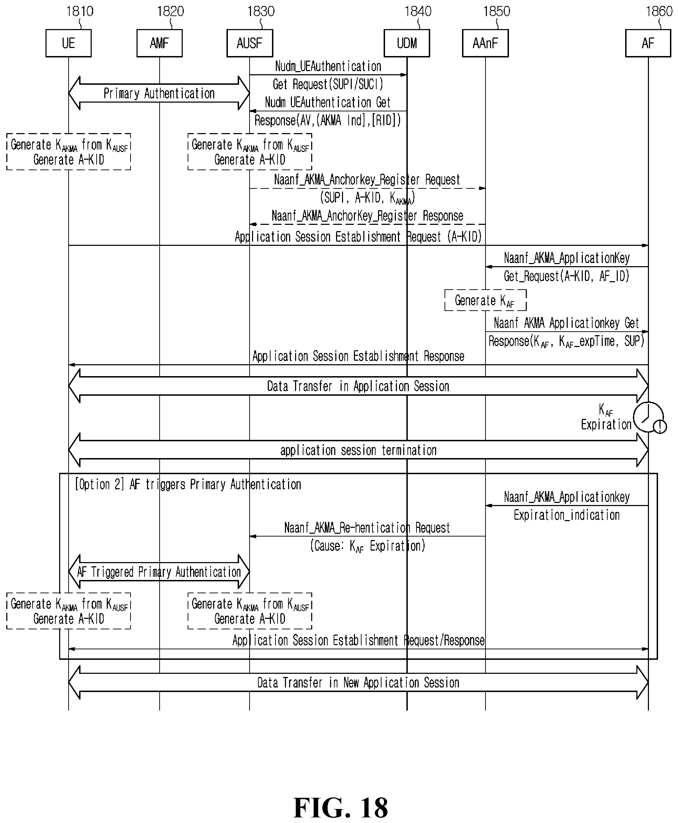

As another example, referring to FIG. 18, when an application session is terminated, an AF 1860 may inform an AAnF 1850 of expiration of K_{AF}. Herein, in order to newly request primary authentication, the AAnF 1850 may transmit a reauthentication request message together with cause information for the expiration of the K_{AF} to an AUSF 1840. Next, the AUSF 1840 may trigger primary authentication, and a new K_{AKMA} A-KID may be generated in each of a network and a terminal through primary authentication. Next, a new K_{AF} may be generated at a step of requesting generation of an application session. That is, like in FIG. 16 described above, a session generation request message may be transmitted after primary authentication, and the new K_{AF} may be generated and used for an application service during a process of receiving a session generation response message. Herein, a terminal 1810 may generate an application session with the AF 1860 by using the A-KID that is newly generated.

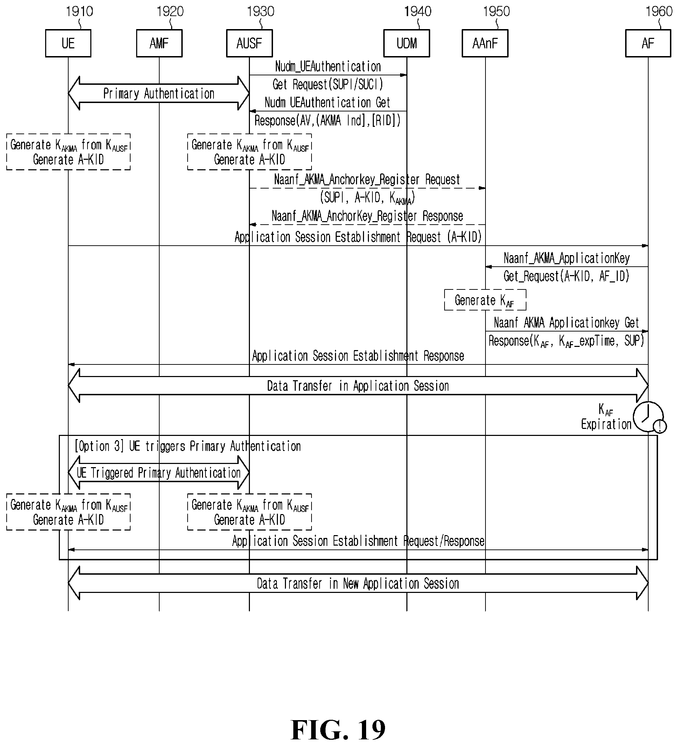

As another example, referring to FIG. 19, a terminal 1910, which recognizes expiration of K_{AF}, may trigger primary authentication. As a concrete example, the terminal 1910 may recognize the expiration of the K_{AF} based on an expiration time of the K_{AF} and trigger primary authentication accordingly. Next, an AUSF 1930 may trigger primary authentication, and a new K_{AKMA} and A-KID may be generated in each of a network and the terminal through primary authentication. Next, a new K_{AF} may be generated at a step of requesting generation of an application session. That is, as in FIG. 12 described above, a session generation request message may be transmitted after primary authentication, and the new K_{AF} may be generated and used for an application service during a process of receiving a session generation response message. Herein, the terminal may generate an application session with an AF by using the A-KID that is newly generated.

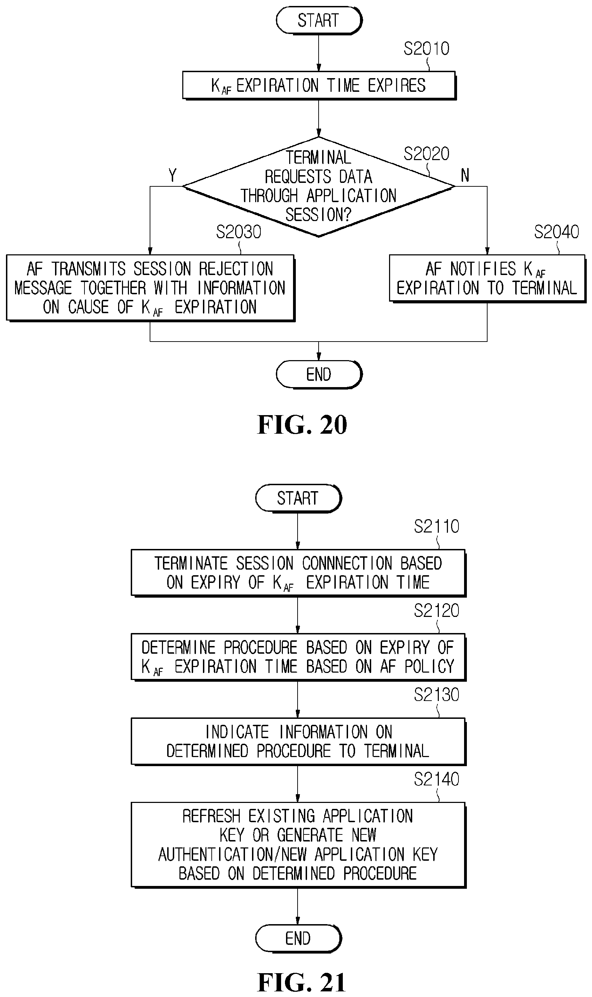

FIG. 20 is a flowchart showing a method for delivering expiry information of an expiration time of an application key that is applicable to the present disclosure.

Referring to FIG. 20, an application key for an application session of a terminal and a network may be generated, and an expiration time of the application key may be set. Herein, the application key may be the above-described K_{AF}. Herein, when the expiration time of the application key expires, the terminal may not be able to perform data transmission using the application key through an application session (S2010). Herein, an application server may configure an application key and set an expiration time, if there is a corresponding application key based on an application session establishment request of the terminal. On the other hand, if there is no corresponding application key based on the application session establishment request of the terminal, the application server may request an application key to an AAnF, obtain and configure an application key generated from the AAnF, and set an expiration time. Herein, the application server may be the above-described AF.

As an example, in case the expiration time of the configured application key expires, the application server may indicate to the terminal that the expiration time of the application key expires. Herein, in case the terminal requests data through an application session (S2020), the application server may transmit a session reject message together with information on a cause of the expiration of the application key to the terminal (S2030). That is, the terminal may transmit an application session request message to the application server due to occurrence of data and receive the application session reject message as a response to the application session request message, thereby perceiving whether or not the application key expires, which may be the same as described in FIG. 15 above.

As another example, in case the terminal does not request data through an application session (S2020), the application server may indicate the expiration of the application key to the terminal through a separate message (S2040). As an example, the application server may indicate the expiration of the application key to the terminal through the separate message at a time when the application key expires.

As another example, the application server may indicate the expiration of the application key to the terminal through the separate message at a time when the application key expires, irrespective of whether or not a data request from the terminal is present, which may be the same as described in FIG. 16 above.

FIG. 21 is a flowchart showing a method for delivering expiry information of an expiration time of an application key that is applicable to the present disclosure. Referring to FIG. 21, an application session connection may be terminated based on the expiry of the expiration time of the application key (S2110). Herein, an application server may determine a procedure based on the expiry of the expiration time of the application key based on an application policy (S2120). As a concrete example, the application server may refresh the existing application key to use a same key value and set an expiration time differently, which is the same as in FIG. 17. As another example, the application server may request a mutual primary authentication procedure for a terminal through a network, and this may be the same as in FIG. 18. As another example, the terminal may request the application server to refresh an application key, and this may be the same as in FIG. 19.

Herein, as an example, the application server may indicate information on a procedure determined as the above-described procedure to the terminal (S2130). Next, based on any one of the above-described procedures as a determined procedure, the terminal may refresh the default application key or generate a new application key by performing the primary authentication again, and this is the same as described above (S2140).

In addition, as an example, an application server may receive an application session establishment request including identification information of a first key from a terminal. Herein, the application server may be the above-described AF. In addition, the first key may be K_AKMA, the identification information of the first key may be K-AID, which is the same as described above. The terminal may generate the first key and the identification information of the first key based on primary authentication with a network. An AUSF may generate an identical first key and identification information of the first key based on the primary authentication. The application server may determine a first application key based on the identification information of the first key and transmit an application session establishment response message to the terminal based on the first application key. The application server may receive data from the terminal through an established application session. In addition, in case the application server determines a first application key, an expiration time of the first application key may be determined together, and the application session may be validly established within the expiration time of the first application key.

In addition, as an example, when the expiration time of the first application key expires, the application server may notify expiry information of the expiration time of the first application key to the terminal. Herein, in case the application server receives a connection request from the terminal after the expiration time of the first application key expires, the application server may notify the expiry information of the expiration time of the first application key to the terminal through an application session reject message based on the connection request of the terminal. Herein, cause information of an application session reject message may include the expiry information of the expiration time of the first application key and first application key reconfiguration information. That is, based on the connection request of the terminal, the application server may notify the expiry information of the expiration time of the application key as a response.

As another example, in case the expiration time of the first application key expires, the application server may notify the expiry information of the expiration time of the first application key to the terminal through a notification message, and the notification message may include the expiry information of the expiration time of the first application key and the first application key reconfiguration information. Herein, the notification message may be a separate message for indicating the expiry of the expiration time of the application key. The application server may transmit the notification message to the terminal at a time when the expiration time of the first application key expires.

In addition, as an example, in case the expiration time of the first application key expires, an application session is terminated, and after the application session is terminated, the application server and the terminal may perform at least any one of an application key reestablishment procedure and a new authentication procedure.

Herein, in case the application key reestablishment procedure is performed, the terminal may transmit an application session establishment request including identification information of a first key to the application server again, and the application server may determine a second application key based on the identification information of the first key. Herein, as an application session establishment response message based on the second application key is transmitted to the terminal, data may be received from the terminal through an established application session. Herein, a key value of the second application key may be set to the same as a key value of the first application key, and an expiration time of the second application key may be set differently from the expiration time of the first application key. That is, an existing application key may be refreshed and used, and only an expiration time may be set differently.

In addition, in case the new authentication procedure is performed, the terminal and the network may perform the primary authentication again and generate a second key and identification information of the second key. In addition, an AUSF may generate an identical second kay and identification information of the second key based on the primary authentication. The application server may determine the second application key based on the identification information of the second key and transmit the application session establishment response message to the terminal based on the second application key. Next, data may be received from the terminal through an established application session.

In addition, in case the application server determines the second application key, an expiration time of the second application key may be determined together, and an application session may be validly established within the expiration time of the second application key. Herein, the key value of the second application key may be set differently from the key value of the first application key, and the expiration time of the second application key may be set differently from the expiration time of the first application key. That is, an application key may be newly configured based on the new authentication procedure.

In addition, as an example, the new authentication procedure may be triggered by the application server. In addition, as an example, the new authentication procedure may be triggered by the terminal.

In addition, the application server may transmit indication information indicating whether the application key reestablishment procedure or the new authentication procedure is to be performed to the terminal. In addition, as an example, the indication information may further include information on an agent that triggers the new authentication procedure, but is not limited to a specific embodiment..

As the examples of the proposal method described above may also be included in one of the implementation methods of the present disclosure, it is an obvious fact that they may be considered as a type of proposal methods. In addition, the proposal methods described above may be implemented individually or in a combination (or merger) of some of them. A rule may be defined so that information on whether or not to apply the proposal methods (or information on the rules of the proposal methods) is notified from a base station to a terminal through a predefined signal (e.g., a physical layer signal or an upper layer signal).

### Industrial Applicability

The embodiments of the present disclosure are applicable to various radio access systems. Examples of the various radio access systems include a 3^{rd} generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method comprising:
receiving, by an application function, a first application session establishment request message comprising first identification information related to a first key from a user equipment, UE,
wherein the UE generates the first key and the first identification information based on a primary authentication and an authentication server function also generates the first key and the first identification information based on the primary authentication;
receiving, by the application function, a first application key generated based on the first key, and information related to an expiration time of the first application key;
transmitting, by the application function, a first application session establishment response message to the UE; and
based on expiry of the expiration time:
i) notifying, by the application function, expiry information related to the expiration time to the UE;
ii) terminating, by the application function, an application session; and
iii) after terminating the application session, performing, by the application function, at least one of an application key reestablishment procedure or a new authentication procedure,
wherein performing of the application key reestablishment procedure comprises:
i) receiving, by the application function, a second application session establishment request message comprising the first identification information from the UE;
ii) receiving, by the application function, a second application key generated based on the first key, and information related to an expiration time of the second application key; and
iii) transmitting, by the application function, a second application session establishment response message to the UE.

2. The method of claim 1, wherein, based on the application function receiving a connection request from the UE after expiry of the expiration time, the expiry information is notified through an application session reject message based on the connection request of the UE, and
wherein cause information of the application session reject message comprises the expiry information and first application key reconfiguration information.

3. The method of claim 1, wherein, based on expiry of the expiration time, the expiry information is notified through a notification message, and
wherein the notification message comprises the expiry information and first application key reconfiguration information.

4. The method of claim 3, wherein the notification message is transmitted upon expiry of the expiration time.

5. The method of claim 1, wherein a key value related to the second application key is the same as a key value related to the first application key, and an expiration time of the second application key is set differently from the expiration time of the first application key.

6. The method of claim 1, wherein performing of the new authentication procedure comprises:
i) receiving, by the application function, a third application session establishment request message comprising second identification information related to a second key from the UE,
wherein the UE generates the second key and the second identification information based on a new primary authentication, and the authentication server function also generates the second key and the second identification information based on the new primary authentication;
ii) receiving, by the application function, a third application key generated based on the second key, and information related to an expiration time of the third application key; and
iii) transmitting, by the application function, a third application session establishment response message to the UE.

7. The method of claim 6, wherein a key value of the third application key is set differently from a key value of the first application key, and the expiration time of the third application key is set differently from the expiration time of the first application key.

8. The method of claim 1, wherein the new authentication procedure is triggered by the application function or the UE.

9. The method of claim 1, wherein the application function transmits indication information indicating whether to perform the application key reestablishment procedure or the new authentication procedure to the UE.

10. An application function node (1420) comprising:
at least one transceiver;
at least one processor; and
at least one memory operably coupled with the at least one processor and storing instructions that instruct, based on being executed, the application function node to perform a specific operation,
wherein the specific operation comprises:
receiving a first application session establishment request message comprising first identification information related to a first key from a user equipment, UE,
wherein the UE generates the first key and the first identification information based on a primary authentication and an authentication server function also generates the first key and the first identification information based on the primary authentication;
receiving a first application key generated based on the first key, and information related to an expiration time of the first application key;
transmitting a first application session establishment response message to the UE; and
based on expiry of the expiration time:
i) notifying expiry information related to the expiration time to the UE;
ii) terminating an application session; and
iii) after terminating the application session, performing at least one of an application key reestablishment procedure or a new authentication procedure, and
wherein performing of the application key reestablishment procedure comprises:
i) receiving a second application session establishment request message comprising the first identification information from the UE;
ii) receiving a second application key generated based on the first key, and information related to an expiration time of the second application key; and
iii) transmitting a second application session establishment response message to the UE.

11. A method comprising:
generating, by a user equipment, UE, a first key and first identification information related to the first key based on a primary authentication, wherein an authentication server function also generates the first key and the first identification information based on the primary authentication;
transmitting, by the UE, a first application session establishment request message comprising the first identification information to an application function,
wherein, based on the first identification information, a first application key and an expiration time of the first application key are derived;
receiving, by the UE, a first application session establishment response message from the application function; and
based on expiry of the expiration time, receiving, by the UE, expiry information related to the expiration time from the application function,
wherein an application session is terminated, and after the application session is terminated, at least one of an application key reestablishment procedure or a new authentication procedure is performed, and
wherein the application key reestablishment procedure comprises:
i) transmitting, by the UE, a second application session establishment request message comprising the first identification information to the application function, wherein, based on the first identification information, a second application key and an expiration time of the second application key are derived; and
ii) receiving, by the UE, a second application session establishment response message from the application function.

## Patentansprüche

1. Verfahren, umfassend:
Empfangen, durch eine Anwendungsfunktion, einer ersten Anwendungs-Sitzungseinrichtungs-Anforderungsnachricht, die erste Identifikationsinformationen bezüglich eines ersten Schlüssels von einem Benutzergerät (UE) umfasst,
wobei das UE den ersten Schlüssel und die ersten Identifikationsinformationen auf Grundlage einer primären Authentifizierung erzeugt und eine Authentifizierungsserverfunktion den ersten Schlüssel und die ersten Identifikationsinformationen ebenfalls auf Grundlage der primären Authentifizierung erzeugt;
Empfangen, durch die Anwendungsfunktion, eines ersten Anwendungsschlüssels, der auf Grundlage des ersten Schlüssels erzeugt wird, und von Informationen bezüglich einer Ablaufzeit des ersten Anwendungsschlüssels;
Übertragen, durch die Anwendungsfunktion, einer ersten Anwendungs-Sitzungseinrichtungs-Antwortnachricht an das UE; und
auf Grundlage des Ablaufs der Ablaufzeit:
i) Benachrichtigen, durch die Anwendungsfunktion, des UE über Ablaufinformationen bezüglich der Ablaufzeit;
ii) Beenden, durch die Anwendungsfunktion, einer Anwendungssitzung; und
iii) nach dem Beenden der Anwendungssitzung, Durchführen, durch die Anwendungsfunktion, zumindest eines von einem Anwendungsschlüssel-Neueinrichtungsverfahren oder einem neuen Authentifizierungsverfahren,
wobei das Durchführen des Anwendungsschlüssel-Neueinrichtungsverfahrens umfasst:
i) Empfangen, durch die Anwendungsfunktion, einer zweiten Anwendungs-Sitzungseinrichtungs-Anforderungsnachricht, die die ersten Identifikationsinformationen umfasst, von dem UE;
ii) Empfangen, durch die Anwendungsfunktion, eines zweiten Anwendungsschlüssels, der auf Grundlage des ersten Schlüssels erzeugt wird, und von Informationen bezüglich einer Ablaufzeit des zweiten Anwendungsschlüssels; und
iii) Übertragen, durch die Anwendungsfunktion, einer zweiten Anwendungs-Sitzungseinrichtungs-Antwortnachricht an das UE.

2. Verfahren nach Anspruch 1, wobei, auf Grundlage dessen, dass die Anwendungsfunktion nach Ablauf der Ablaufzeit eine Verbindungsanforderung von dem UE empfängt, die Ablaufinformationen über eine Anwendungs-Sitzungsablehnungsnachricht auf Grundlage der Verbindungsanforderung des UE mitgeteilt werden, und
wobei Ursacheninformationen der Anwendungs-Sitzungsablehnungsnachricht die Ablaufinformationen und erste Anwendungsschlüssel-Neukonfigurationsinformationen umfassen.

3. Verfahren nach Anspruch 1, wobei, auf Grundlage des Ablaufs der Ablaufzeit, die Ablaufinformationen über eine Benachrichtigungsnachricht mitgeteilt werden, und
wobei die Benachrichtigungsnachricht die Ablaufinformationen und erste Anwendungsschlüssel-Neukonfigurationsinformationen umfasst.

4. Verfahren nach Anspruch 3, wobei die Benachrichtigungsnachricht bei Ablauf der Ablaufzeit übertragen wird.

5. Verfahren nach Anspruch 1, wobei ein Schlüsselwert bezüglich des zweiten Anwendungsschlüssels derselbe ist wie ein Schlüsselwert bezüglich des ersten Anwendungsschlüssels und eine Ablaufzeit des zweiten Anwendungsschlüssels anders als die Ablaufzeit des ersten Anwendungsschlüssels festgelegt wird.

6. Verfahren nach Anspruch 1, wobei das Durchführen des neuen Authentifizierungsverfahrens umfasst:
i) Empfangen, durch die Anwendungsfunktion, einer dritten Anwendungs-Sitzungseinrichtungs-Anforderungsnachricht, die zweite Identifikationsinformationen bezüglich eines zweiten Schlüssels umfasst, von dem UE,
wobei das UE den zweiten Schlüssel und die zweiten Identifikationsinformationen auf Grundlage einer neuen primären Authentifizierung erzeugt und die Authentifizierungsserverfunktion den zweiten Schlüssel und die zweiten Identifikationsinformationen ebenfalls auf Grundlage der neuen primären Authentifizierung erzeugt;
ii) Empfangen, durch die Anwendungsfunktion, eines dritten Anwendungsschlüssels, der auf Grundlage des zweiten Schlüssels erzeugt wird, und von Informationen bezüglich einer Ablaufzeit des dritten Anwendungsschlüssels; und
iii) Übertragen, durch die Anwendungsfunktion, einer dritten Anwendungs-Sitzungseinrichtungs-Antwortnachricht an das UE.

7. Verfahren nach Anspruch 6, wobei ein Schlüsselwert des dritten Anwendungsschlüssels anders als ein Schlüsselwert des ersten Anwendungsschlüssels festgelegt wird und die Ablaufzeit des dritten Anwendungsschlüssels anders als die Ablaufzeit des ersten Anwendungsschlüssels festgelegt wird.

8. Verfahren nach Anspruch 1, wobei das neue Authentifizierungsverfahren durch die Anwendungsfunktion oder das UE ausgelöst wird.

9. Verfahren nach Anspruch 1, wobei die Anwendungsfunktion Anzeigeinformationen, die angeben, ob das Anwendungsschlüssel-Neueinrichtungsverfahren oder das neue Authentifizierungsverfahren durchzuführen ist, an das UE überträgt.

10. Knoten einer Anwendungsfunktion (1420), umfassend:
mindestens einen Transceiver;
mindestens einen Prozessor; und
mindestens einen Speicher, der mit dem mindestens einen Prozessor funktionsfähig gekoppelt ist und Anweisungen speichert, die bei ihrer Ausführung den Knoten der Anwendungsfunktion dazu anweisen, eine bestimmte Operation durchzuführen,
wobei die bestimmte Operation umfasst:
Empfangen einer ersten Anwendungs-Sitzungseinrichtungs-Anforderungsnachricht, die erste Identifikationsinformationen bezüglich eines ersten Schlüssels von einem Benutzergerät (UE) umfasst,
wobei das UE den ersten Schlüssel und die ersten Identifikationsinformationen auf Grundlage einer primären Authentifizierung erzeugt und eine Authentifizierungsserverfunktion den ersten Schlüssel und die ersten Identifikationsinformationen ebenfalls auf Grundlage der primären Authentifizierung erzeugt;
Empfangen eines ersten Anwendungsschlüssels, der auf Grundlage des ersten Schlüssels erzeugt wird, und von Informationen bezüglich einer Ablaufzeit des ersten Anwendungsschlüssels;
Übertragen einer ersten Anwendungs-Sitzungseinrichtungs-Antwortnachricht an das UE; und
auf Grundlage des Ablaufs der Ablaufzeit:
i) Benachrichtigen des UE über Ablaufinformationen bezüglich der Ablaufzeit;
ii) Beenden einer Anwendungssitzung; und
iii) nach dem Beenden der Anwendungssitzung, Durchführen zumindest eines von einem Anwendungsschlüssel-Neueinrichtungsverfahren oder einem neuen Authentifizierungsverfahren,
wobei das Durchführen des Anwendungsschlüssel-Neueinrichtungsverfahrens umfasst:
i) Empfangen einer zweiten Anwendungs-Sitzungseinrichtungs-Anforderungsnachricht, die die ersten Identifikationsinformationen umfasst, von dem UE;
ii) Empfangen eines zweiten Anwendungsschlüssels, der auf Grundlage des ersten Schlüssels erzeugt wird, und von Informationen bezüglich einer Ablaufzeit des zweiten Anwendungsschlüssels; und
iii) Übertragen einer zweiten Anwendungs-Sitzungseinrichtungs-Antwortnachricht an das UE.

11. Verfahren, umfassend:
Erzeugen, durch ein Benutzergerät (UE), eines ersten Schlüssels und erster Identifikationsinformationen bezüglich des ersten Schlüssels auf Grundlage einer primären Authentifizierung, wobei eine Authentifizierungsserverfunktion den ersten Schlüssel und die ersten Identifikationsinformationen ebenfalls auf Grundlage der primären Authentifizierung erzeugt;
Übertragen, durch das UE, einer ersten Anwendungs-Sitzungseinrichtungs-Anforderungsnachricht, die die ersten Identifikationsinformationen umfasst, an eine Anwendungsfunktion,
wobei auf Grundlage der ersten Identifikationsinformationen ein erster Anwendungsschlüssel und eine Ablaufzeit des ersten Anwendungsschlüssels abgeleitet werden;
Empfangen, durch das UE, einer ersten Anwendungs-Sitzungseinrichtungs-Antwortnachricht von der Anwendungsfunktion; und
auf Grundlage des Ablaufs der Ablaufzeit, Empfangen, durch das UE, von Ablaufinformationen bezüglich der Ablaufzeit von der Anwendungsfunktion,
wobei eine Anwendungssitzung beendet wird und nach dem Beenden der Anwendungssitzung zumindest eines von einem Anwendungsschlüssel-Neueinrichtungsverfahren oder einem neuen Authentifizierungsverfahren durchgeführt wird,
wobei das Anwendungsschlüssel-Neueinrichtungsverfahren umfasst:
i) Übertragen, durch das UE, einer zweiten Anwendungs-Sitzungseinrichtungs-Anforderungsnachricht, die die ersten Identifikationsinformationen umfasst, an die Anwendungsfunktion, wobei auf Grundlage der ersten Identifikationsinformationen ein zweiter Anwendungsschlüssel und eine Ablaufzeit des zweiten Anwendungsschlüssels abgeleitet werden; und
ii) Empfangen, durch das UE, einer zweiten Anwendungs-Sitzungseinrichtungs-Antwortnachricht von der Anwendungsfunktion.

## Revendications

1. Procédé comprenant :
la réception, par une fonction d'application, d'un premier message de demande d'établissement de session d'application comprenant des premières informations d'identification relatives à une première clé, provenant d'un équipement utilisateur, UE,
dans lequel l'UE génère la première clé et les premières informations d'identification sur la base d'une authentification primaire, et une fonction de serveur d'authentification génère également la première clé et les premières informations d'identification sur la base de l'authentification primaire;
la réception, par la fonction d'application, d'une première clé d'application générée à partir de la première clé, et d'informations relatives à un instant d'expiration de la première clé d'application;
la transmission, par la fonction d'application, d'un premier message de réponse d'établissement de session d'application à l'UE; et
sur la base de l'expiration de l'instant d'expiration:
i) notifier, par la fonction d'application, des informations d'expiration relatives à l'instant d'expiration à l'UE;
ii) mettre fin, par la fonction d'application, à une session d'application; et
iii) après avoir mis fin à la session d'application, effectuer, par la fonction d'application, au moins l'une parmi une procédure de rétablissement d'une clé d'application ou une nouvelle procédure d'authentification,
dans lequel la mise en œuvre de la procédure de rétablissement d'une clé d'application comprend:
i) la réception, par la fonction d'application, d'un deuxième message de demande d'établissement de session d'application comprenant les premières informations d'identification provenant de l'UE;
ii) la réception, par la fonction d'application, d'une deuxième clé d'application générée à partir de la première clé, et d'informations relatives à un instant d'expiration de cette deuxième clé d'application; et
iii) la transmission, par la fonction d'application, d'un deuxième message de réponse d'établissement de session d'application à l'UE.

2. Procédé selon la revendication 1, dans lequel, lorsque la fonction d'application reçoit une demande de connexion en provenance de l'UE après l'expiration de l'instant d'expiration, les informations d'expiration sont notifiées par le biais d'un message de rejet de session d'application basé sur la demande de connexion de l'UE, et
dans lequel les informations relatives à la cause du message de rejet de session d'application comprennent les informations d'expiration et les premières informations de reconfiguration de clé d'application.

3. Procédé selon la revendication 1, dans lequel, sur la base de l'expiration de l'instant d'expiration, les informations d'expiration sont notifiées par le biais d'un message de notification, et
dans lequel le message de notification comprend les informations d'expiration et les premières informations de reconfiguration de clé d'application.

4. Procédé selon la revendication 3, dans lequel le message de notification est transmis lors d'expiration de l'instant d'expiration.

5. Procédé selon la revendication 1, dans lequel une valeur de clé associée à la deuxième clé d'application est identique à une valeur de clé associée à la première clé d'application, et l'instant d'expiration de la deuxième clé d'application est défini différemment de celui de la première clé d'application.

6. Procédé selon la revendication 1, dans lequel la mise en œuvre de la nouvelle procédure d'authentification comprend:
i) la réception, par la fonction d'application, d'un troisième message de demande d'établissement de session d'application comprenant des deuxièmes informations d'identification relatives à une deuxième clé, provenant de l'UE,
dans lequel l'UE génère la deuxième clé et les deuxièmes informations d'identification sur la base d'une nouvelle authentification primaire, et la fonction de serveur d'authentification génère également la deuxième clé et les deuxièmes informations d'identification sur la base de la nouvelle authentification primaire;
ii) la réception, par la fonction d'application, d'une troisième clé d'application générée à partir de la deuxième clé, et d'informations relatives à un instant d'expiration de la troisième clé d'application; et
iii) la transmission, par la fonction d'application, d'un troisième message de réponse d'établissement de session d'application à l'UE.

7. Procédé selon la revendication 6, dans lequel une valeur de clé associée à la troisième clé d'application est définie différemment d'une valeur de clé associée à la première clé d'application, et l'instant d'expiration de la troisième clé d'application est défini différemment de celui de la première clé d'application.

8. Procédé selon la revendication 1, dans lequel la nouvelle procédure d'authentification est déclenchée par la fonction d'application ou par l'UE.

9. Procédé selon la revendication 1, dans lequel la fonction d'application transmet à l'UE des informations d'indication indiquant s'il faut effectuer la procédure de rétablissement de clé d'application ou la nouvelle procédure d'authentification.

10. Nœud de fonction d'application (1420) comprenant:
au moins un émetteur-récepteur;
au moins un processeur ; et
au moins une mémoire couplée de manière opérationnelle à l'au moins un processeur et stockant des instructions qui, lorsqu'elles sont exécutées, amènent le nœud de fonction d'application à effectuer une opération spécifique,
dans lequel l'opération spécifique comprend:
la réception d'un premier message de demande d'établissement de session d'application comprenant des premières informations d'identification relatives à une première clé, provenant d'un équipement utilisateur, UE,
dans lequel l'UE génère la première clé et les premières informations d'identification sur la base d'une authentification primaire, et une fonction de serveur d'authentification génère également la première clé et les premières informations d'identification sur la base de l'authentification primaire;
la réception d'une première clé d'application générée à partir de la première clé, et d'informations relatives à un instant d'expiration de la première clé d'application;
la transmission d'un premier message de réponse d'établissement de session d'application à l'UE; et
sur la base de l'expiration de l'instant d'expiration:
i) notifier des informations d'expiration relatives à l'instant d'expiration à l'UE;
ii) mettre fin à une session d'application; et
iii) après avoir mis fin à la session d'application, effectuer au moins l'une parmi une procédure de rétablissement d'une clé d'application ou une nouvelle procédure d'authentification,
dans lequel la mise en œuvre de la procédure de rétablissement d'une clé d'application comprend:
i) la réception d'un deuxième message de demande d'établissement de session d'application comprenant les premières informations d'identification provenant de l'UE;
ii) la réception d'une deuxième clé d'application générée à partir de la première clé, et d'informations relatives à l'instant d'expiration de la deuxième clé d'application; et
iii) la transmission d'un deuxième message de réponse d'établissement de session d'application à l'UE.

11. Procédé comprenant :
la génération, par un équipement utilisateur, UE, d'une première clé et de premières informations d'identification relatives à la première clé sur la base d'une authentification primaire, dans lequel une fonction de serveur d'authentification génère également la première clé et les premières informations d'identification sur la base de l'authentification primaire;
la transmission, par l'UE, d'un premier message de demande d'établissement de session d'application comprenant les premières informations d'identification à une fonction d'application,
dans lequel, sur la base des premières informations d'identification, une première clé d'application et un instant d'expiration de la première clé d'application sont dérivés;
la réception, par l'UE, d'un premier message de réponse d'établissement de session d'application en provenance de la fonction d'application; et
sur la base de l'expiration de l'instant d'expiration, la réception, par l'UE, d'informations d'expiration relatives à l'instant d'expiration provenant de la fonction d'application,
dans lequel une session d'application est terminée, et après que la session d'application est terminée, au moins l'une parmi une procédure de rétablissement d'une clé d'application ou une nouvelle procédure d'authentification est effectuée, et
dans lequel la procédure de rétablissement d'une clé d'application comprend:
i) la transmission, par l'UE, d'un deuxième message de demande d'établissement de session d'application comprenant les premières informations d'identification à la fonction d'application, dans lequel, sur la base des premières informations d'identification, une deuxième clé d'application et un instant d'expiration de la deuxième clé d'application sont dérivés; et
(ii) la réception, par l'UE, d'un deuxième message de réponse d'établissement de session d'application en provenance de la fonction d'application.
